# EUROPEAN PATENT SPECIFICATION

(11) **EP 4 016 218 B1**
(45) Date of publication and mention of the grant of the patent: **01.01.2025**
(21) Application number: 21208461.0
(22) Date of filing: 16.11.2021
(51) Int. Cl.: G05B 19/418

(54) **MANUFACTURING SYSTEM AND METHOD FOR PROCESSING WORKPIECES**
FERTIGUNGSSYSTEM UND VERFAHREN ZUR BEARBEITUNG VON WERKSTÜCKEN
SYSTÈME DE FABRICATION ET PROCÉDÉ DE TRAITEMENT DE PIÈCES

(30) Priority: 17.12.2020 US 202063127128 P
(43) Date of publication of application: 22.06.2022
(73) Proprietor: Aurora Flight Sciences Corporation, Manassas, VA 20110 (US)
(72) Inventor: Snider II, James McDaniel, Manassas, VA 20110 (US); Jensen, Devin Richard, Manassas, VA 20110 (US); Bosworth, William Robert, Manassas, VA 20110 (US); Holifield, Timothy, Manassas, VA 20110 (US)
(74) Representative: Hoffmann Eitle

(56) References cited:
- WO-A1-2020/206478
- US-A- 4 673 075
- US-A- 5 374 231
- US-A- 5 500 507
- US-A1- 2010 031 489
- US-A1- 2015 142 156

## Description

### FIELD

The present disclosure relates generally to manufacturing systems and, more particularly, to an automated manufacturing system for processing workpieces.

### BACKGROUND

Robotic devices are increasingly incorporated into manufacturing facilities to perform tasks previously performed by humans. The use of robotic devices may reduce labor costs, and allow for an increase in production throughput of the manufacturing facility. Examples of manufacturing operations performed by robotic devices include machining of workpieces, inspection of workpieces, and other types of operations. Workpieces may be manually loaded onto a station next to a robotic device. When the robotic device completes an operation on the workpiece, the workpiece may be manually unloaded from the station, and replaced with another workpiece to be operated on by the robotic device.

Manufacturing facilities containing robotic devices typically include safety systems configured to stop movement of the robotic devices upon detecting the presence of a human within the work envelope of the robotic devices. In addition, when a workpiece is manually loaded or unloaded from a station at a robotic device, the movement of the robotic device may be temporarily stopped until the human moves out of the robot work envelope. As may be appreciated, the periods of time when robotic devices are non-operational reduces the production throughput of the manufacturing facility.

As can be seen, there exists a need in the art for a manufacturing system that avoids periods of non-operation of robotic devices otherwise occurring during changeout of workpieces.

US 8,312,611 B2, according to its abstract, states a first holding frame of a component holding unit is allowed to hold a plurality of components composing a first assembly and a second holding frame of the component holding unit is allowed to hold a plurality of components composing a second assembly which is to be mounted on the first assembly. The first assembly held onto the first holding frame and the second assembly held onto the second holding frame are assembled by an assembly work unit. The second holding frame is allowed to reciprocate towards the first holding frame to pass the second assembly from the second holding, frame to the first holding frame. Thereafter, the first assembly and the second assembly which are held onto the first holding frame are assembled and coupled together by the assembly work unit.

### SUMMARY

A manufacturing system for processing workpieces according to claim 1 and a method of processing workpieces according to claim 10 are provided. Optional features are recited in the dependent claims.

The above-noted needs associated with manufacturing systems are specifically addressed and alleviated by the present disclosure which provides a manufacturing system for processing workpieces. The manufacturing system includes a manufacturing cell, a plurality of pallets each configured to support one or more workpieces, and at least one robotic device mounted in the manufacturing cell and configured to operate on the one or more workpieces. In addition, the manufacturing system includes at least two processing stations, including a first processing station and a second processing station, each located in the manufacturing cell and each configured to support any one of the plurality of pallets in fixed position relative to the robotic device. Furthermore, the manufacturing system includes at least one transport device configured to transport any one of the pallets to and from each of the first processing station and the second processing station. Additionally, the manufacturing system includes a controller configured to coordinate the operation of the manufacturing cell in a manner allowing the robotic device to continuously operate on a workpiece supported by one of the plurality of pallets at the first processing station while another one of the plurality of pallets is transferred to or from the second processing station.

Also disclosed is a manufacturing cell having a robotic device, a first processing station and a second processing station, and a controller. The robotic device is configured to operate on one or more workpieces each supported on a pallet. Each pallet is configured to be transported by a transport device. The first processing station and the second processing station are located within reach of the robotic device and are each configured to support a pallet in fixed position relative to the robotic device. The controller is configured to coordinate the operation of the manufacturing cell in a manner allowing the robotic device to continuously operate on a workpiece supported by a pallet at the first processing station while another pallet is transferred to or from the second processing station.

In addition, disclosed is a method of processing workpieces. The method includes supporting one or more workpieces on each of a plurality of pallets, and transporting, using a transport device, any one of the plurality of pallets onto a first processing station located in a manufacturing cell within reach of a robotic device. In addition, the method includes operating, using the robotic device, on a workpiece supported by one of the plurality of pallets at the first processing station while another one of the plurality of pallets is transferred to or from a second processing station located within reach of the robotic device.

The features, functions and advantages that have been discussed can be achieved independently in various examples of the present disclosure or may be combined in yet other examples, further details of which can be seen with reference to the following description and drawings below.

### BRIEF DESCRIPTION OF THE DRAWINGS

These and other features of the present disclosure will become more apparent upon reference to the drawings wherein like numbers refer to like parts throughout and wherein:
Figure 1 is a perspective view of an example of a manufacturing cell for processing workpieces, and having several subcells including a machining subcell, an inspection subcell, and a cleaning subcell, and further illustrating a plurality of pallet stations each configured to support a pallet, with each pallet configured to support one or more workpieces;
Figure 2 is a plan view of a manufacturing cell illustrating robotic devices mounted within the machining subcell and the inspection subcell, and further illustrating each robotic device having two pallet stations, and also illustrating transport devices for transporting pallets of workpieces to and from the pallet stations;
Figure 2A is a plan view of an example of a manufacturing cell in which the transport devices comprise a conveyor system having a plurality of conveyor sections for transporting the pallets between the plurality of pallet stations;
Figure 3 is a perspective view of an example of a transport device transporting a pallet and approaching an entrance to the machining subcell;
Figure 4 is a perspective view of the example of the machining subcell of Figure 3 with the roof removed to illustrate a pair of robotic devices mounted within the machining subcell, and illustrating a pair of pallet stations located proximate each robotic device;
Figure 4A is a further example of the machining subcell illustrating the conveyor system for placing the pallets at the pallet stations proximate the robotic devices;
Figure 4B is a sectional view taken along line 4B-4B of Figure 4A, and illustrating an example of the conveyor system supporting a pallet at one of the processing stations, and further illustrating an example of a three-point locating system for lifting the pallet off of the conveyor system in preparation for the robotic device operating on the workpiece;
Figure 4C is a sectional view taken along line 4C-4C of Figure 4A, and illustrating a three-point locating system lifting the pallet off of the conveyor system and precisely positioning and orienting the pallet relative to the robotic device;
Figure 5 is a plan view of the machining subcell illustrating an example of an intracell-mounted reference system for establishing the position of the robotic devices and the pallet stations within the machining subcell;
Figure 5A is a plan view of the example of the machining subcell of Figure 4A showing the conveyor system for placing the pallets at the pallet stations proximate the robotic devices;
Figure 6 is a perspective view of an example of a robotic device in the machining subcell operating on a workpiece supported on a pallet mounted on a station frame at one of the pallet stations located proximate the robotic device;
Figure 7 is a perspective view of an example of a pallet supporting a single workpiece;
Figure 8 is a perspective view of an example of a pallet supporting a pair of workpieces;
Figure 9 is a perspective view of an example of a pallet supporting four workpieces, with two of the workpieces having a different configuration than the other two workpieces;
Figure 10 is a perspective view of an example of a transport device having a pair of forks which are shown inserted into a pair of fork tubes of a pallet while the pallet is mounted on a station frame at one of the pallet stations;
Figure 11 is an exploded perspective view of an example of a three-point locating system configured for accurately locating a station frame on the floor of the manufacturing system at one of the pallet stations;
Figure 12 is a perspective view of the three-point locating system of Figure 11, and illustrating a cone system of the three-point locating system, wherein the cone system includes a primary locating cone, a secondary locating cone, and a rest button each removably coupled to an embedded plate bonded within a cored hole formed in the floor of the manufacturing cell;
Figure 13 is a perspective view of a station frame having a cup system of the three-point locating system, wherein the cup system includes a primary locating cup, a secondary locating cup, and a flat pad configured to engage respectively with the primary locating cone, the secondary locating cone, and the flat pad of the cone system that is engaged to the floor as shown in Figure 12;
Figure 14 is a perspective view of a pallet mounted to the station frame of Figure 13, wherein the pallet includes a cup system which is mounted on a cone system of the station frame of Figure 13;
Figure 15 is a perspective view of an example of a station frame mounted to a pallet station via a three-point locating system, and further showing a cup system mounted on an upper side of the station frame;
Figure 16 is a magnified view of a portion of the station frame taken along line 16 of Figure 15, and illustrating a station vacuum cone and an radio frequency identification (RFID) read/write head mounted to the station frame;
Figure 17 is a magnified view of a portion of a pallet mounted on a station frame and taken along line 17 of Figure 14, and illustrating the RFID read/write head of the station frame, and an RFID tag of the pallet;
Figure 18 is a perspective view of an underside of an example of a pallet illustrating the cup system, and having a pair of pallet vacuum cups also mounted to the underside of the pallet;
Figure 19 is a plan view of the underside of the pallet of Figure 18 illustrating the cup system, the pallet vacuum cups, and further illustrating a vacuum reserve tank and a vacuum manifold;
Figure 20 is a perspective view of a portion of the pallet of Figure 19 illustrating a plurality of vacuum conduits coupling the vacuum manifold respectively to the pair of pallet vacuum cups, and to the vacuum reserve tank;
Figure 21 is a sectional view taken along line 21-21 of Figure 14, and illustrating an example of the primary or secondary locating cup of each of the pallet and the station frame mounted on the primary or secondary locating cone of each of the pallet station and floor of the manufacturing cell;
Figure 22 is a sectional view taken along line 22-22 of Figure 14, and illustrating an example of the flat pad of each of the pallet and the station frame mounted on the rest button of each of the pallet station and the floor of the manufacturing cell;
Figure 23 is a sectional view of a pallet being lowered onto a station frame, and illustrating the primary locating cup of the pallet engaging a side of the primary locating cone of the station frame, and further illustrating the pallet vacuum cups laterally offset from other;
Figure 24 is a sectional view of the pallet of Figure 23 further lowered onto the station frame, and illustrating the engagement of the primary locating cup of the pallet with the primary locating cone of the station frame;
Figure 25 is a sectional view of the pallet of Figure 24 completely lowered onto the station frame, and illustrating the full engagement of the primary locating cup of the pallet with the primary locating cone of the station frame, and further illustrating the coupling of one of the pallet vacuum cups with the station vacuum cone;
Figure 26 is a sectional view taken along line 26 of Figure 24, and illustrating one of the pallet vacuum cups laterally offset from the station vacuum cone during the process of lowering the pallet onto the station frame;
Figure 27 is a sectional view taken along line 27 of Figure 25, and illustrating the pallet completely lowered onto the station frame, and further illustrating the pallet vacuum cup fully engaged with the station vacuum cone;
Figure 28 is a side view of an example of a transport device transporting a pallet;
Figure 29 is a magnified view of the portion of Figure 28 identified by reference number 29, and illustrating a transport device vacuum pump fluidly coupled to a transport device vacuum cone, which is coupled to one of the pallet vacuum cup mounted on the underside of the pallet;
Figure 30 is a sectional view of a pallet during the initial stage of being lowered by a transport device onto a station frame, and illustrating one of the pallet vacuum cups of the pallet engaged to the transport device vacuum cone of the transport device, while the other pallet vacuum cup of the pallet is vertically separated from the station vacuum cone of the station frame;
Figure 31 is a sectional view of the pallet further lowered onto the station frame, and illustrating the pallet vacuum cup of the pallet still engaged to the transport device vacuum cone of the transport device, and further illustrating other the pallet vacuum cup of the pallet engaged to the station vacuum cone of the station frame;
Figure 32 is a section view the pallet completely lowered onto the station frame, and illustrating one of the pallet vacuum cups of the pallet disengaged from the transport device vacuum cone of the transport device, while the other pallet vacuum cup of the pallet remains engaged to the station vacuum cone;
Figure 33 is a perspective view of a transport device approaching a cell door of the machining subcell, and further illustrating a pass-through sensor mounted on a wall of the machining subcell;
Figure 34 is a side view of the transport device approaching the subcell door of the machining subcell;
Figure 35 is a flowchart of a method of processing workpieces.

### DETAILED DESCRIPTION

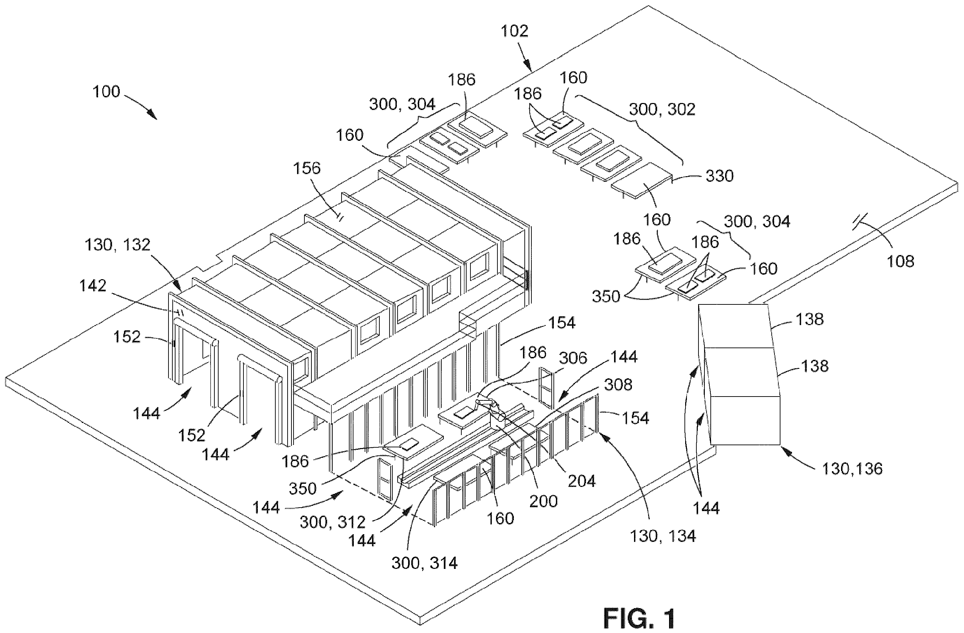

Referring now to the drawings which illustrate preferred and various examples of the disclosure, shown in Figures 1-2 are examples of a manufacturing system 100 for automated processing of workpieces 186. The manufacturing system 100 includes a manufacturing cell 102, which may be part of a manufacturing facility or factory. The manufacturing system 100 includes a plurality of pallets 160, and at least one robotic device 200 mounted in the manufacturing cell 102. Each one of the pallets 160 is configured to support one or more workpieces 186. Each robotic device 200 is configured to operate on the workpieces 186. In some examples, each robotic device 200 includes at least one robotic arm 204.

The manufacturing system 100 includes a plurality of pallet stations 300. The pallet stations 300 include at least two processing stations for each robotic device 200. For example, for each one of the robotic devices 200, the manufacturing system 100 includes a first processing station 306 and a second processing station 308 located in the manufacturing cell 102. The first processing station 306 and the second processing station 308 are each configured to support any one of the pallets 160 in fixed position relative to the robotic device 200 to allow the robotic device 200 to operate on one or more workpieces 186 supported on the pallet 160.

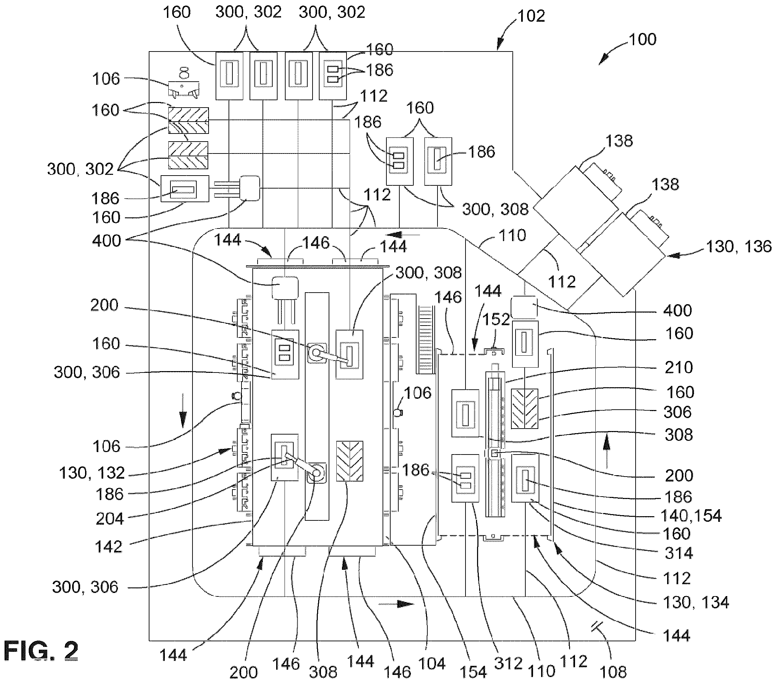

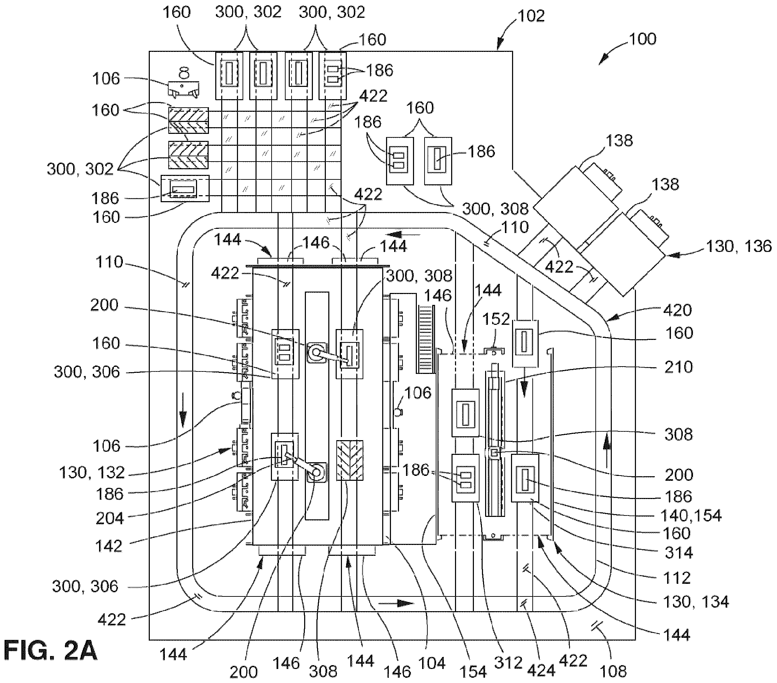

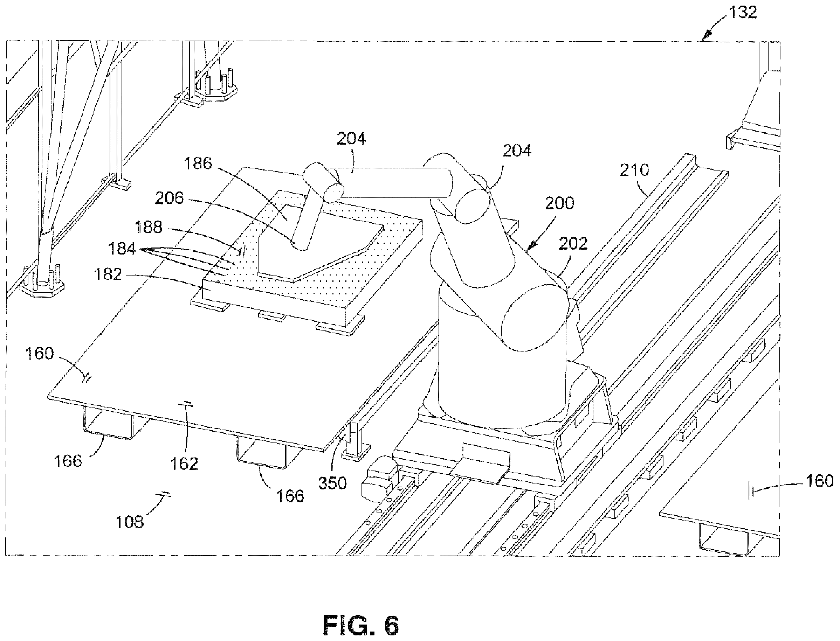

As shown in Figures 2-3, the manufacturing system 100 includes at least one transport device 400 configured to autonomously (i.e., without human intervention) transport any one of the pallets 160 to and from the first processing station 306 and the second processing station 308. In addition, the transport devices 400 may transport pallets 160 to and from any one of the other pallet stations 300 in the manufacturing cell 102. As shown in Figure 2, the manufacturing system 100 further includes a controller 104 (i.e., a processor) configured to coordinate the operation of the manufacturing cell 102 in a manner allowing the robotic device 200 to continuously operate on a workpiece 186 supported by one of the pallets 160 at the first processing station 306 while another one of the pallets 160 is transferred to or from the second processing station 308. In this regard, the controller 104 may be configured to coordinate the operation of each transport device 400 and each robotic device 200 in a manner allowing each robotic device 200 to continuously operate on a workpiece 186 supported by a pallet 160 at a first processing station 306 of a robotic device 200, while the transport device 400 transfers another pallet 160 to or from the second processing station 308 of the same robotic device 200. In this regard, the robotic arms 204 of a robotic device 200 may continue to move and/or the end effector 206 (Figure 6) of the robotic device 200 may continue to operate on a workpiece 186 at the first processing station 306 while a transport device 400 transports a pallet 160 to or from the second processing station 308. However, in other examples not shown, one or more of the pallet stations 300 may include at least one processing station for each robotic device 200, and the controller 104 may coordinate the operation of the robotic device 200 and the transport device 400 to allow the robotic device 200 to operate on a workpiece 186 supported on a pallet 160 at a processing station while the transport device 400 is in close proximity to the same processing station.

As shown in Figures 1-2A, the pallet stations 300 may include one or more feed stations 302 and/or one or more buffer queuing stations 304 or locations. Each of the feed stations 302 is configured to support a pallet 160 prior to transporting or movement by a transport device 400 to a processing station for being operated on by a robotic device 200 in accordance with predetermined processing operations defined for the workpieces 186 on the pallet 160. After the manufacturing cell 102 has completed all processing operations defined for the workpiece 186 on the pallet 160, a transport device 400 may return the pallet 160 to one of the feed stations 302, after which the pallet 160 may be removed (e.g., manually, via forklift or crane - not shown) from the feed station 302 and placed into storage or transported to another manufacturing cell for further processing. The manufacturing cell 102 may also include one or more buffer queuing stations 304 or locations, as mentioned above. Each buffer queuing station 304 may temporarily support any one of the pallets 160 in between processing operations defined for the workpieces 186 on the pallet 160. The manufacturing cell 102 may also include one or more operator stations 106 (e.g., a desk) for occupation by personnel such as a production monitor or a supervisor for monitoring the operation of the manufacturing system 100.

Advantageously, the autonomous operation of the robotic devices 200 in coordination with the transportation of the pallets 160 via the transport devices 400 avoids periods of non-operation of the robotic devices 200 that would otherwise occur if the workpieces 186 were manually loaded and unloaded at the processing stations of each robotic device 200. As a result of the continuous operation of the robotic devices 200, the manufacturing system 100 results in an increase in the speed at which workpieces 186 move through the manufacturing cell 102, which results in an increase in production throughput of the manufacturing cell 102 relative to the throughput of a conventional manufacturing system that relies on manual labor for transporting and/or processing workpieces 186. In addition, the presently-disclosed manufacturing system 100 significantly reduces labor costs relative to the labor costs associated with conventional manufacturing systems.

Referring to Figures 1-6, the manufacturing cell 102 may include one or more subcells 130 for performing any one of a variety of different processes on the workpieces 186. In the example shown in the figures, the manufacturing cell 102 includes a machining subcell 132, an inspection subcell 134, and a cleaning subcell 136. Any one or more of the subcells 130 in the manufacturing cell 102 may include one or more robotic devices 200 for autonomously performing operations on workpieces 186. For example, the machining subcell 132 may include one or more robotic devices 200 configured for machining, trimming, drilling, sanding, additive manufacturing (e.g., additive printing), or performing any one of a variety of other types of operations. The inspection subcell 134 may include one or more robotic devices 200 for inspecting the dimensions of a workpiece 186, such as after machining and/or cleaning of the workpiece 186. In one example, the end effector 206 on the robotic device 200 in the inspection subcell 134 may be an inspection laser scanner (not shown) for measuring the length, width, hole diameter, shape, surface contour, feature spatial position (e.g., in three-dimensional space), and/or other geometrical features of a workpiece 186. Although the presently-disclosed manufacturing system 100 is described in the context of a machining subcell 132, an inspection subcell 134, and a cleaning subcell 136, the manufacturing cell 102 may include any one of a variety of different subcells 130, and is not limited to the subcells 130 shown in the figures.

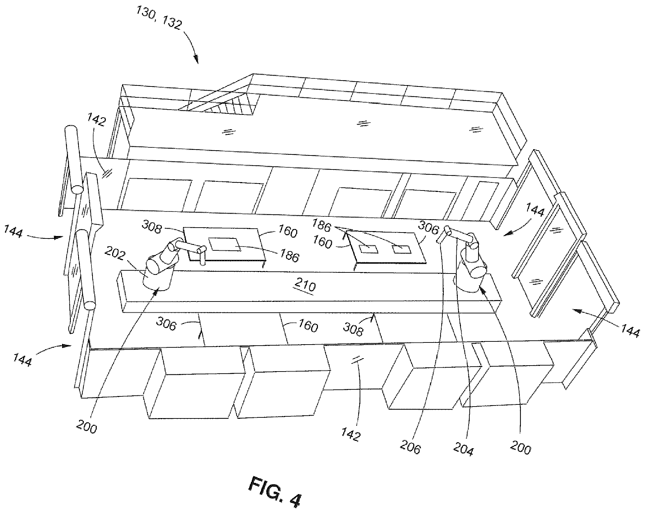

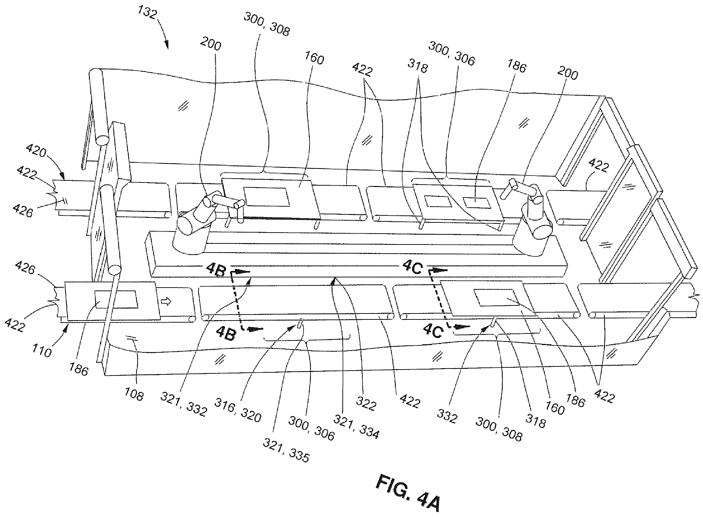

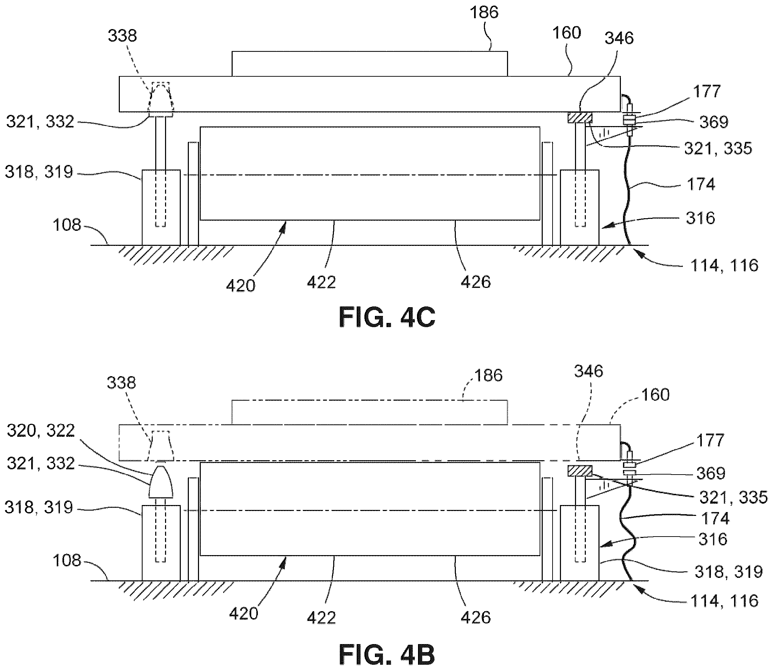

As mentioned above, the manufacturing system 100 includes one or more robotic devices 200 configured to operate on workpieces 186 when mounted at pallets 160 installed at one of the processing stations. For example, the machining subcell 132 may include a pair of robotic devices 200. In the present disclosure, a robotic device 200 may be described as any device, machine, assembly, system, subsystem, and/or any type of automated or semi-automated equipment capable of autonomously performing one or more operations on a workpiece. In this regard, a robotic device 200 is not limited to devices having one or more robotic arms 204. In the example shown, each of the robotic devices 200 may optionally be mounted on a linear rail system 210 (e.g., Figure 4) to allow the robotic devices 200 to move in a longitudinal direction for expanding the work envelope of each robotic device 200. In some examples, the robotic device 200 may have a rotatable robotic base 202.

As shown in Figure 6, each robotic device 200 may have at least one robotic arm 204 having an end effector 206 mounted on a distal end of the robotic arm 204. The end effector 206 may be configured as any one of a variety of different types of processing tools. For example, the end effector 206 may be configured as a machining spindle which holds machining tools. However, in other examples, a robotic device 200 may include an end effector 206 configured as a forming tool, an additive manufacturing head (e.g., a three-dimensional printing head), a lamination head for laminating composite material onto a layup tool, a coating applicator for applying a coating to a workpiece 186, or other end effector configurations. For the inspection subcell 134, the end effector 206 of the robotic device 200 may be a laser inspection device. In another example, the end effector 206 may be an ultrasonic device for scanning composite workpieces 186 for internal conditions such as voids. As may be appreciated, the end effector 206 of the robotic device 200 in the inspection subcell 134 may be provided in any one of a variety of configurations for inspecting a workpiece 186.

The robotic devices 200 of the manufacturing cell 102 may have relatively high degrees-of-freedom to allow the robotic devices 200 to operate on a wide variety of workpieces 186 of different sizes, shapes, materials, and configurations. In addition, one or more of the robotic devices 200 may have an automated tool changer (not shown), providing the capability for autonomous (i.e., without human intervention) changeout of tools (not shown) used by an end effector 206 while one or more transport devices 400 are loading or unloading pallets 160 at the first processing station 306 and/or the second processing station 308. In this regard, autonomous changeout of the end effector 206 tools may allow the robotic devices 200 to perform a wide variety of operations on a workpiece 186. For example, a robotic device 200 may perform an additive manufacturing operation to add material to a workpiece 186, and then autonomously change out the end effector 206 tool to enable the robotic device 200 to perform drilling operations on the same workpiece 186 or on a different workpiece 186. Advantageously, the increased operational flexibility of the robotic devices 200 due to autonomous end effector 206 tool changeouts may reduce the amount of factory floor space required for production equipment, relative to the amount of floor space required to support a plurality of different types of production equipment (e.g., a conventional milling machine, an additive manufacturing machine) required to perform the same operations using a single robotic device 200.

As mentioned above, the manufacturing system 100 includes at least two processing stations, including a first processing station 306 and a second processing station 308, dedicated to each robotic device 200 and configured to support a pallet 160 within reach of the robotic device 200. In the example manufacturing cell 102 shown in Figures 2-5, the machining subcell 132 includes two robotic devices 200, each having a first processing station 306 and a second processing station 308. The first processing station 306 may support a pallet 160 of workpieces 186 being operated on by the robotic device 200, while the second processing station 308 supports a pallet 160 of workpieces 186 that have been operated on by the robotic device 200, and which are awaiting a transport device 400 to transport the pallet 160 to the next pallet station 300. In the machining subcell 132 arrangement shown in Figures 2-5, the two robotic devices 200 may be configured to work collaboratively on workpieces 186 that exceed the size of a single pallet 160. For example, two processing stations on one side of the linear rail system 210 may collectively support a single workpiece 186 while both of the robotic devices 200 operate on the workpiece 186. Operation of the robotic devices 200 in the machining subcell 132 may be monitored and/or at least partially controlled by a human operator located at an operator station 106 where the operator has a view of the robotic devices 200.

Referring still to Figures 1-5A, the machining subcell 132 may be enclosed by subcell walls 142 and a subcell roof 156 for controlling dust and preventing uncontrolled human entry. The machining subcell 132 may include at least one entrance 144 for passage of transport devices 400 into and out of the machining subcell 132. As described in greater detail below, each entrance 144 may have at least one pass-through sensor 152 and an entrance barrier 146 (e.g., a subcell door 148) that is selectively configurable (i.e., openable and closable) to allow passage (i.e., entry or exit) of the transport device 400 through the entrance 144 upon detection of the transport device 400 at the entrance 144, without triggering an emergency stop of the robotic devices 200 in the machining subcell 132. The machining subcell 132 may also include a separate man-door (not shown) to allow human access into the machining subcell 132. The machining subcell 132 may include a dust-management system (not shown) for maintaining a clean working environment and reducing the negative impact of dust accumulation on the robotic devices 200 and other components and workpieces 186 in the machining subcell 132. For example, the machining subcell 132 may include a dust collection booth (not shown) for collecting dust generated during machining, trimming, drilling, and/or sanding of workpieces 186.

In Figures 2-2A, the inspection subcell 134 is shown having a single robotic device 200 mounted on a linear rail system 210, and having an inspection laser scanner as the end effector 206. In addition, the inspection subcell 134 is shown having four (4) processing stations each located within reach of the robotic device 200, including a first, second, third, and fourth processing station 306, 308, 312, 314. Similar to the operation of the machining subcell 132, the robotic device 200 in the inspection subcell 134 may be configured to inspect one or more workpieces 186 mounted on a pallet 160 located at one processing station, while one or more pallets 160 are respectively transported to or from one of the other processing stations in the inspection subcell 134. Similar to the machining subcell 132, the operation of the inspection subcell 134 may be monitored and/or partially controlled by an operator at an operator station 106 providing a view of the robotic device 200. The inspection subcell 134 may be at least partially enclosed by a subcell boundary 140 which, in the example shown, may include a safety fence 154 on each of opposing sides of the inspection subcell 134. The opposing ends of the inspection subcell 134 may each be protected by an optical safety curtain (not shown) generated by one or more door laser scanners (not shown) sweeping a laser beam or curtain across the entrance 144 of the inspection subcell 134. Similar to the above-described operation of the machining subcell 132, the entrances 144 on the ends of the inspection subcell 134 may each include a pass-through sensor 152 that, when triggered (e.g., upon receiving a transport device signal), causes the controller 104 to allow a transport device 400 to enter the inspection subcell 134 without triggering an emergency stop of the robotic device 200.

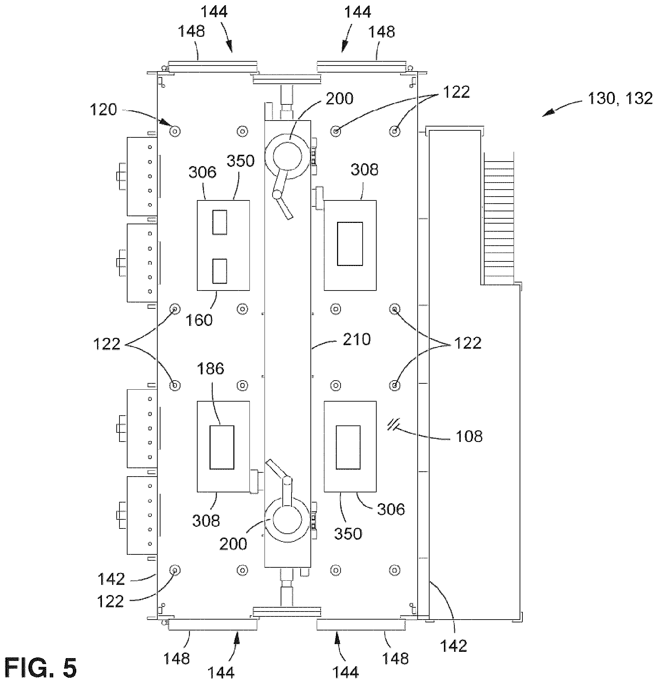

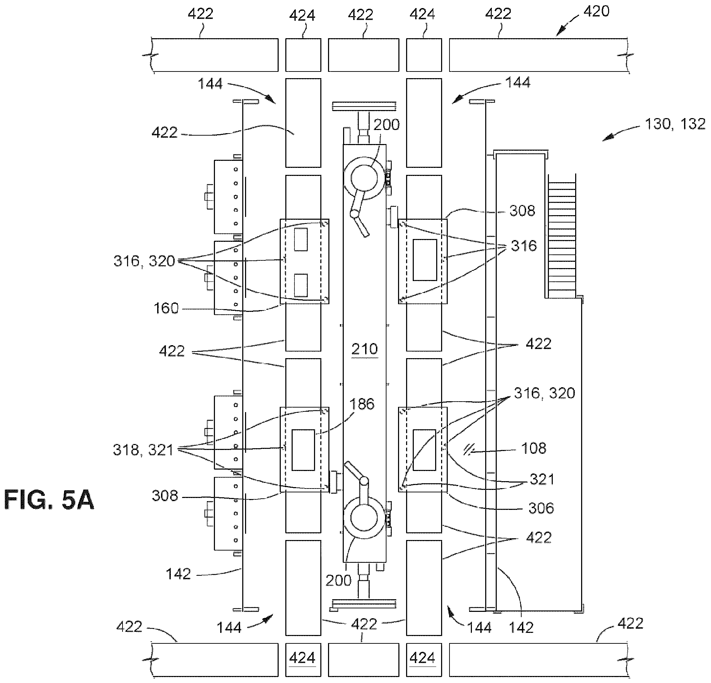

Referring briefly to Figure 5, any one of the subcells 130 may include an intracell-mounted reference system 120 for establishing the positions of one or more objects within the subcell 130. The intracell-mounted reference system 120 may include a plurality of ball nests 122 embedded within the floor 108 or on the subcell walls 142, ceiling, or other monuments. Each ball nest 122 may be configured to receive a spherical ball (not shown) to serve as a target for a laser system (not shown) for establishing or verifying the three-dimensional position of the objects (e.g., pallet stations 300, station frames 350, robotic devices 200 - Figure 6) in the subcell 130 (e.g., the machining subcell 132 and/or the inspection subcell 134). The intracell-mounted reference system 120 may be used if there have been recent major changes to the manufacturing cell 102, such as changes to the configuration of the subcell 130, or following the installation of new robotic devices 200, or if it is suspected that the position or orientation of the station frames 350 or robotic devices 200 may have been altered due to a recent seismic event, or due to contact of a transport device 400 with a station frame 350 or a robotic device 200 in the subcell 130.

In addition to subcells 130 having robotic devices 200, the manufacturing system 100 may include one or more subcells 130 that are operated by technicians (i.e., humans) instead of robotic devices 200. Each subcell 130 staffed by a technician may include one or more processing stations for supporting a pallet 160. For example, the cleaning subcell 136 in Figure 2 has two cleaning booths 138 arranged side-by-side. However, in other examples, the manufacturing cell 102 may include cleaning booths 138 located in line and/or between robotic devices 200. Regardless of location, each cleaning booth 138 may be staffed by a cleaning technician, and may include a single processing station for supporting a pallet 160 containing one or more workpieces 186 to be cleaned or washed by the cleaning technician. The cleaning subcell 136 may be used for cleaning workpieces 186, such as after the workpieces 186 have been processed by the machining subcell 132, and prior to inspection of the workpieces 186 by the inspection subcell 134. The cleaning subcell 136 may include a dust control and collection system (not shown). In addition, each cleaning booth 138 may have access to a compressed air source to allow the cleaning technician to blow machining dust off of the pallets 160, workpieces 186, and workpiece mounting fixtures 182 (e.g., Figure 6) that support the workpieces 186 on the pallets 160. The manufacturing cell 102 may also have subcells (not shown) to perform additional manual processes such as deburring of workpieces 186, visual inspection of workpieces 186, and other manual operations.

Referring to Figures 2-3, the manufacturing system 100 may include any number of transport devices 400. As mentioned above, each transport device 400 is configured to transport pallets 160 between processing stations. The transport devices 400 may be provided in any one of a variety of different configurations. For example, in Figure 2, the transport devices 400 may be provided as vehicles. In other examples not shown, the transport devices 400 may be provided as overhead equipment such as cranes or gantries (not shown), or as drones (not shown). In a still further example shown in Figures 2A, 4A-4C and 5A, the transport devices 400 may be provided as a plurality of floor-mounted conveyor sections 422 of a conveyor system 420, as described below. In one example, a transport device 400 may be described as a robotic vehicle programmed to autonomously navigate the manufacturing cell 102. A robotic vehicle (e.g., Figure 2) may have a guidance system for navigating along predetermined transport device routes 110 between pallet stations 300.

In Figure 2A, the conveyor system 420 (e.g., Figure 2A) may have multiple conveyor sections 422 defining the transport devices routes 110 between the pallet stations 300. Each conveyor section 422 may includes a conveyor belt 426 (Figure 4A) supported by a series of rollers (not shown). The rollers may be supported by a series of support posts (not shown) extending from the floor 108 on opposite sides of the conveyor belt 426. The conveyor system 420 may include a rotatable conveyor section 424 at each intersection of two conveyor sections 420 oriented in different directions. When a pallet 160 being transported along one conveyor section 422 arrives at a rotatable conveyor section 424, the rotatable conveyor section 424 rotates the pallet 160 to thereby orient the pallet 160 into alignment with the intersecting conveyor section 422 to allow the pallet 160 to move along the intersecting conveyor section 422. Alternatively or additionally, the conveyor system 420 may include a mechanical push mechanism (not shown) at each intersection, to push the pallets 160 from one conveyor section 422 onto an intersecting conveyor section 422.

The transport device routes 110 may be made up of a plurality of route segments 112. The scheduling of the timing and order of movement of the transport devices 400 and/or the pallets 160 between pallet stations 300 may be controlled by the controller 104 of the manufacturing system 100, and may be based on a time simulation of the flow of workpieces 186 through the manufacturing cell 102. The movement of individual transport devices 400 (e.g., Figure 2) along the transport device routes 110, and/or the transportation of the pallets 160 along the transport device routes 110 via the conveyor system 420 (e.g., Figure 2A), may be controlled by a transport device software module.

In the example of Figure 2, the movement of the pallets 160 via the transport devices 400 may be programmed or controlled to travel along certain a known path or route segments 112 in a common (i.e., one-way) direction to avoid conflicts with the movement of other pallets 160 and/or other transport devices 400. The guidance system of the transport devices 400 configured as vehicles may be a laser guidance system (not shown) having a laser device for tracking laser reflectors (not shown) mounted to the floor 108 and/or to other structures (e.g., subcell walls 142, manufacturing facility walls, etc.) of the manufacturing cell 102. In another example, the guidance system of the transport devices 400 may be a magnetic guidance system or a linear scale guidance system comprising sensors (not shown) on each transport device 400 for sensing magnetic elements or scale elements (e.g., magnetic tape, linear scale - not shown) mounted on or in the floor 108 of the manufacturing facility.

The transport devices 400 and/or the manufacturing cell 102 may include one or more safety systems configured to automatically halt the movement of a transport device 400 upon determining the potential for contact between the transport device 400 and an obstruction along a transport device 400 route. In some examples, each transport device 400, such as each robotic vehicle, may include a light imaging and ranging system (e.g., LIDAR) to avoid colliding with unexpected objects. The manufacturing cell 102 may include one or more idle stations (not shown) for temporarily parking a transport device 400 (i.e., vehicle) during the production of workpieces 186. The idle stations may be strategically positioned within the manufacturing cell 102 to decrease the average time required for a transport device 400 to reach any pallet station 300. The idle stations may be located off of the transport device routes 110 to avoid interfering with the movement of other transport devices 400. The idle stations may each include a charging system for recharging the batteries of the transport device 400 while parked at the idle station.

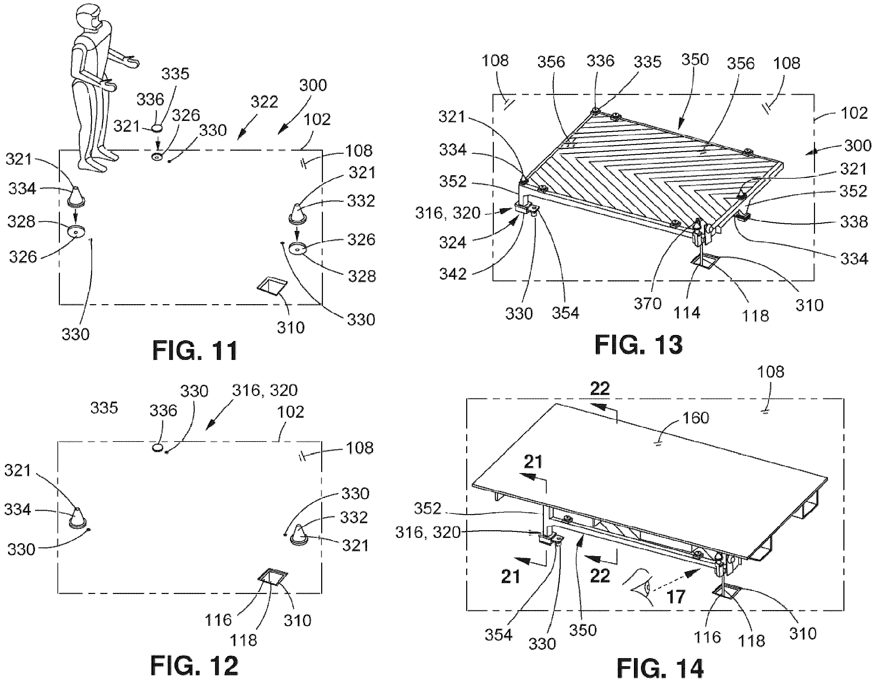

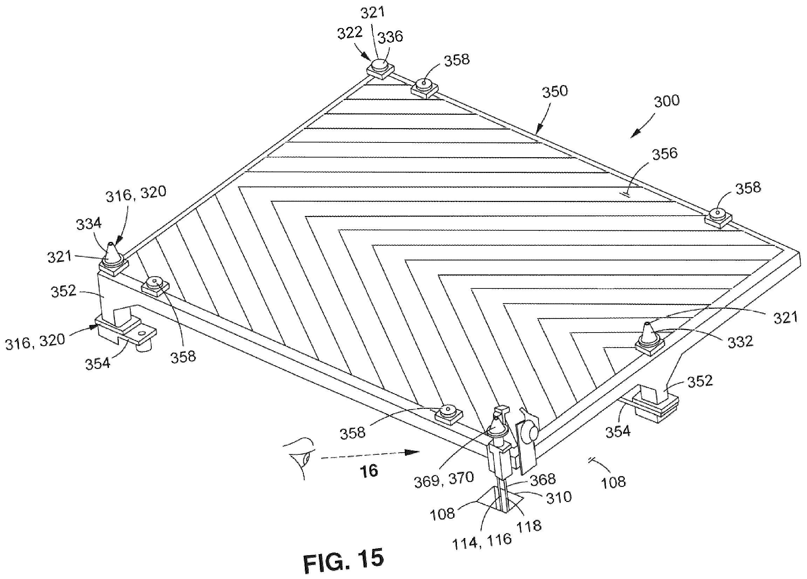

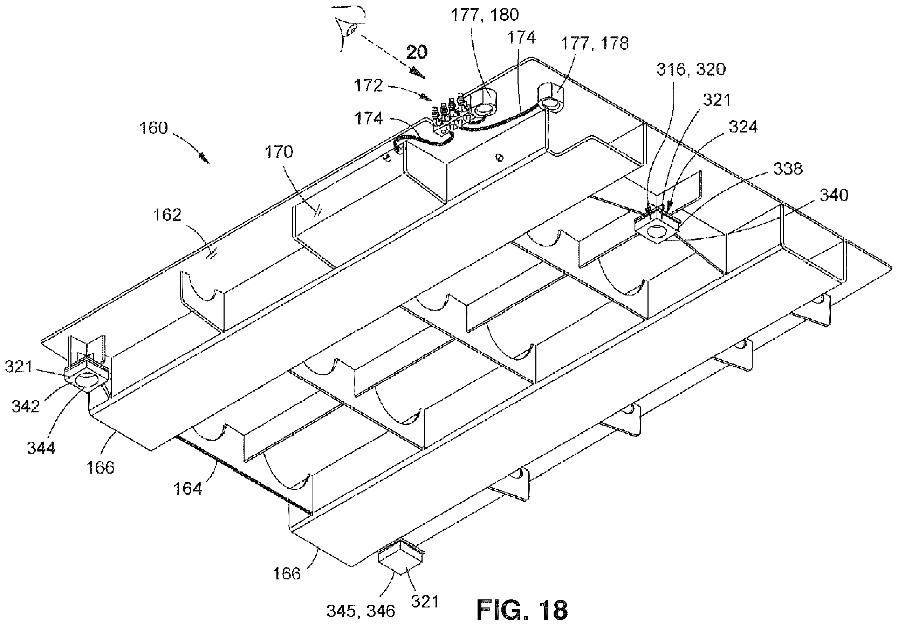

Referring to Figures 1, 4, 5 and 6, the manufacturing system 100, may include a station frame 350 at each pallet station 300. Each station frame 350 may be removably mounted to the floor 108 of the manufacturing cell 102. As shown in Figures 11-16 and 18 and described in greater detail below, each station frame 350 may be precisely and repeatably located and oriented at a pallet station 300 via a mechanical locating system 316 (Figure 15) having multiple locating points 321 (Figure 15) configured to precisely and repeatably locate the station frame 350 to the floor 108 of the manufacturing cell 102. Similarly, each pallet 160 may be located and oriented on a station frame 350 via a mechanical locating system 316 (Figure 18) having multiple locating points 321 (Figure 18) configured to precisely and repeatably locate the pallet 160 to the station frame 350. In the example shown, each locating system 316 may be a three-point locating system 320 having exactly three locating points 321. However, in other examples not shown, the locating system 316 may be a four-point locating system having four locating points 321 arranged in an orthogonal pattern, such as a rectangular pattern or a square pattern. Regardless of the number of locating points 321, the locating system 316, such as the three-point locating system 320 shown in Figures 11-16, is configured such that when a pallet 160 is loaded onto a station frame 350 at a processing station 306, 308, the one or more workpieces 186 (Figure 6) on the pallet 160 (Figure 6) are within the reach envelope of the end effector 206 (Figure 6) of the robotic device 200 (Figure 6) that the processing station 306, 308 is associated with.

For the manufacturing system 100 example of Figures 4A-4C in which the transport device 400 comprises a conveyor system 420, the pallet 160 at each processing station 306, 308 may be located and oriented via a mechanical locating system 316. The mechanical locating system 316 at each processing station 306, 308 includes a plurality of locating points 321 321 for supporting the pallet 160. Once the conveyor system 420 transports a pallet 160 into one of the processing stations 306, 308 proximate a robotic device 200, the locating points 321 at the processing station 306, 308 are configured to lift the pallet 160 off of the conveyor belt 426, and non-movably support the pallet 160 a relatively short distance (e.g., up to 3 inches) above the conveyor belt 426 in a precise location and orientation relative to the robotic device 200, as described below.

As shown in Figures 4A-4C, the locating points 321 at each processing station 306, 308 may include a cone system 322, comprised of locating cones for lifting and supporting the pallet 160. For example, the locating system 316 at each processing station 306, 308 may be a three-point locating system 320 having a primary locating cone 332 and a secondary locating cone 334, both of which may be located on one side of the conveyor section 422. The primary locating cone 332 and the secondary locating cone 334 are tapered. The three-point locating system 320 also includes a tertiary locating element 335 (e.g., a planar plate) located on an opposite side of the conveyor section 422 from the locating cones. The locating cones may be configured similar to the locating cones described below and shown in Figures 15, 18, 19, and 21-25, and are also shaped complementary to the below-described locating cups of the cup system 324 included with the pallet 160. The primary locating cone 332, the secondary locating cone 334, and the tertiary locating element 335 may each be mounted on a locating point post 318 extending upwardly from the floor 108. Each locating point post 318 has a locating point actuator 319 (e.g., an electromechanical actuator, a pneumatic actuator, a hydraulic actuator, etc.), for vertically moving the primary locating cone 332, the secondary locating cone 334, and the tertiary locating element 335.

Referring to Figure 4B, each pallet 160 may be positioned on the conveyor system 420 such that when a pallet 160 arrives at one of the processing stations 306, 308 (e.g., Figure 4A), the vertical centerlines (not shown) of the locating cups of the pallet 160 are generally aligned with the vertical centerlines (not shown) of the locating cones at the processing station 306, 308. For example, the vertical centerlines of the locating cups of the pallet 160 may be within a relatively small distance (e.g., 0.5 inch) of the vertical centerlines of the locating cones.

Referring to Figure 4C, with the pallet 160 stationary on the conveyor section 422 at the processing station 306, 308, the locating point actuators 319 are activated to move the primary locating cone 332, the secondary locating cone 334, and the tertiary locating element 335 upwardly into engagement respectively with the primary locating cup 337, the secondary locating cup 342, and the tertiary locating feature 345 (e.g., a planar underside) of the pallet 160. The engagement of the tapered shape of the locating cone with the tapered shape of the locating cups results in self-positioning of the pallet 160 (and workpiece 186) into a repeatable and precise location relative to the robotic device 200. The locating point actuators 319 may lift the pallet 160 off of the conveyor belt 426, and non-movably support the pallet 160 (and workpiece 186) in a precise and repeatable location and orientation relative to the robotic device 200.

In Figures 4B-4C, the upward movement of the cone system 322 at the processing station 306, 308 into engagement with the cup system 324 of the pallet 160 may also result in the engagement of a station vacuum connector 369 of the processing station 306, 308 with a pallet vacuum connector 177 of the pallet 160. The station vacuum connector 369 is fluidly coupled to a factory vacuum pressure source 116, such as a factory vacuum pump. When the station vacuum connector 369 is sealingly engaged with the pallet vacuum connector 177, the factory vacuum pressure source 116 may provide vacuum pressure at the apertures 184 (Figure 6) of the mounting surface 188 of the workpiece mounting fixture 182 for vacuum coupling of the workpiece 186 to the workpiece mounting fixture 182 for when the workpiece 186 is operated on by the robotic device 200, as described below with regard to Figure 6.

For the conveyor system 420 of Figures 2, 4A-4C and 5A, the locating system 316 may be omitted from processing stations 306, 308 that do not require precise location and/or precise orientation of the pallet 160 (and workpiece 186). For example, the locating system 316 may be omitted from processing stations 306, 308 that involve manual processes such as washing (e.g., at a cleaning subcell 136), deburring, visual inspection, and other workpiece operations. In addition, the locating system 316 may be omitted from pallet stations 300 such as feed stations 302 and buffer queuing stations 304 or locations. The pallets 160 at feed stations 302 and buffer queuing stations 304 may instead by supported on a conveyor section 422 dedicated to that pallet station 300.

Referring to Figure 6, shown is an example of a manufacturing system 100 wherein each pallet 160 is mounted on a station frame 350 at a processing station 306, 308 near a robotic device 200. As mentioned above, in any of the manufacturing system 100 examples disclosed herein, the pallet 160 may have one or more workpiece mounting fixtures 182. Each workpiece mounting fixture 182 may be configured to support one or more workpieces 186. Each workpiece mounting fixture 182 may have a mounting surface 188. The contour of the mounting surface 188 may be complementary to the contour of the workpiece 186 to be supported by the workpiece mounting fixture 182. The workpiece mounting fixture 182 may be permanently mounted to the pallet 160. For example, each workpiece mounting fixture 182 may be coupled to a pallet 160 via mechanical fasteners extending through one or more of a plurality of fastener holes (e.g., circular holes and/or slots - not shown) formed in a pallet base panel 162.

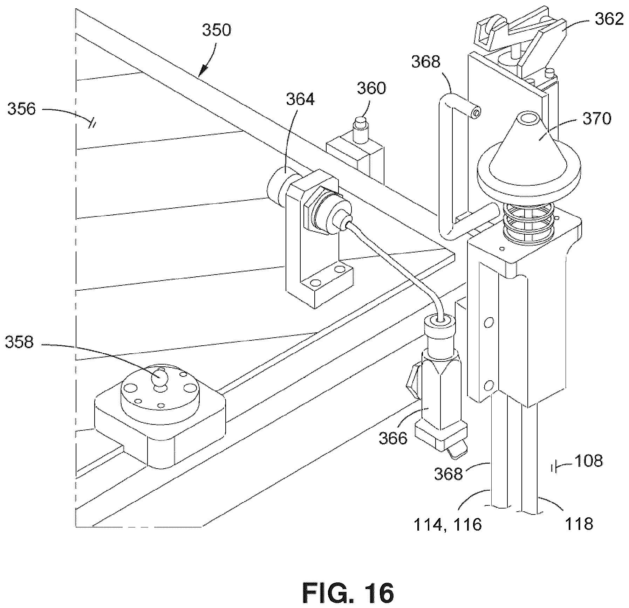

The mounting surface 188 of the workpiece mounting fixture 182 may contain a plurality of apertures 184. The apertures 184 of the workpiece mounting fixture 182 may be fluidly coupled to a vacuum pressure source 114 (Figure 16) via internal passages (not shown) in the workpiece mounting fixture 182. Vacuum pressure at the apertures 184 may result in vacuum coupling of the workpiece 186 to the mounting surface 188, and may prevent movement of the workpiece 186 relative to the pallet 160 when the workpiece 186 is being operated on by the robotic device 200. In addition, vacuum coupling of the workpiece 186 to the mounting surface 188 may prevent movement of the workpiece 186 relative to the pallet 160 when the pallet 160 is being transported by the transport device 400, as described below.

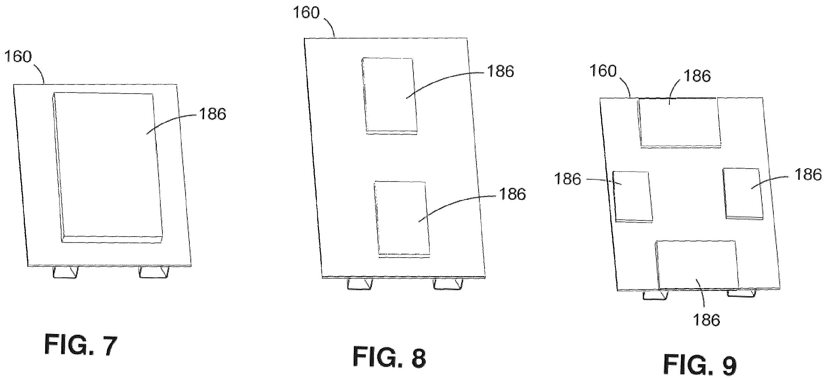

Referring to Figures 7-9, shown are examples of pallets 160 supporting different configurations of workpieces 186, with each workpiece 186 mounted on a workpiece mounting fixture 182 securely coupled to the pallet 160. The pallets 160 may be provided in one or more lengths based on the size and/or quantity of workpieces 186 to be supported by the pallet 160. For example, Figures 7 and 9 illustrate a pallet 160 having a standard size of 65 inches wide by 88 inches long. Figure 7 shows the pallet 160 supporting a single workpiece 186. Figure 9 shows the pallet 160 of the same size as in Figure 7, and showing the pallet 160 supporting four workpieces 186 of relatively small size, with two of the workpieces 186 having a different configuration than the other two workpieces 186 on the pallet 160. Figure 8 illustrates a pallet 160 having the same width as the pallets 160 of Figures 7 and 9, but having an extended length of 113 inches, and is shown supporting two workpieces 186 each having a relatively long length. As may be appreciated, the pallets may be provided in any one a variety of different sizes, shapes and configurations, and is not limited to the sizes and shapes disclosed herein.

As mentioned above, the manufacturing cell 102 may be configured to process workpieces 186 of any size, shape, configuration, and material composition, including metallic workpieces 186 and/or non-metallic workpieces 186. For example, the workpieces 186 may be comprised of aluminum, steel, or any one of a variety of other metallic compositions. In another example, the workpieces 186 may be composite workpieces 186 comprised of fiber-reinforced polymer matrix material.

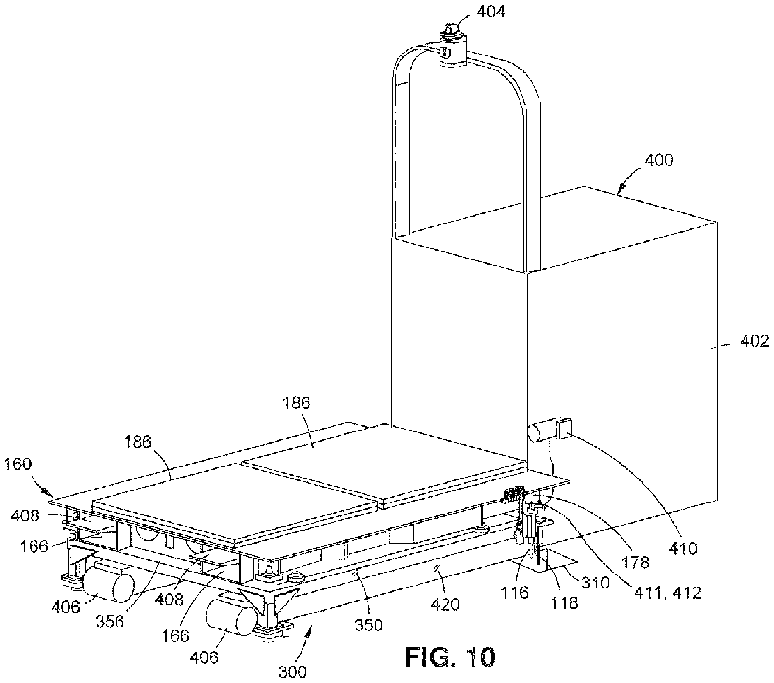

Referring to Figure 10, shown is an example of a transport device 400 configured as a vehicle for transporting pallets 160 between the pallet stations 300 of the manufacturing cell 102. The transport device 400 may have a vehicle chassis 402 and vehicle wheels 406. In the example shown, the transport device 400 has a pair of vertically movable vehicle forks 408. The vehicle forks 408 may be configurable for engagement with a corresponding pair of fork tubes 166 (Figure 6) of each pallet 160 for raising and lowering the pallet 160 onto the pallet stations 300 of the manufacturing cell 102. The vehicle forks 408 may be inserted into the fork tubes 166 of a pallet 160 while the pallet 160 is mounted on a station frame 350 at one of the pallet stations 300. The vehicle forks 408 may be vertically movable for raising and lowering pallets 160 off of pallet stations 300. In an alternative example not shown, the transport device 400 may be configured as a non-forked transport device having a relatively low profile, and may be configurable into a height that is shorter than the height of the station frame panel 356 above the floor 108 (Figure 6). In such an arrangement, the station frame 350 may be open at one end to allow the transport device 400 to move underneath the station frame panel 356 and underneath the pallet 160. Once the transport device 400 is underneath the pallet 160, the transport device 400 may raise upwardly into engagement with the bottom of the pallet 160 to lift the pallet 160 off the station frame 350. The transport device 400 may then translate the pallet 160 away from the station frame 350 and transport the pallet 160 to another pallet station 300.

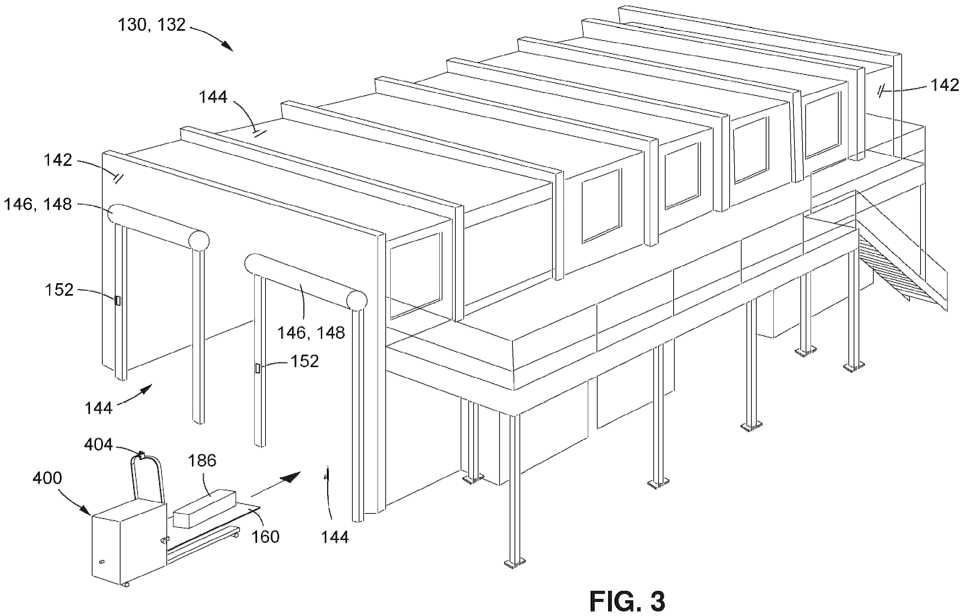

As mentioned above, any transport device 400 vehicle disclosed herein may have a laser guidance system (not shown) having at least one vehicle signaling device 404 (e.g., a laser beacon) for emitting a laser beam for reflecting off of laser reflectors (not shown) mounted at different locations in the manufacturing cell 102. In addition, the laser beam emitted by the vehicle signaling device 404 may be sensed by a pass-through sensor 152 (Figure 3) located proximate an entrance 144 (Figure 3) to a subcell 130 (Figure 3) to trigger activation of the entrance barrier 146 (e.g., a subcell door 148 - Figure 3), thereby allowing the transport device 400 to pass through the entrance 144. In another example, the vehicle signaling device 404 may be a wireless transmitting device configured to transmit a wireless signal over a dedicated wifi network of the manufacturing cell 102. The wireless signal may include a request for opening the entrance 144. While the transport device 400 waits near the entrance 144, the controller 104 (Figure 2), in response to the pass-through sensor 152 sensing or receiving the transport device signal, may determine whether or not to allow the transport device 400 to pass through the entrance 144, as described below. In addition to a vehicle signaling device 404, any one of the transport device 400 examples disclosed herein may also include a transport device vacuum source 410 (e.g., a vacuum pump) for generating vacuum pressure at the apertures 184 of the mounting surface 188 (Figure 6) of the workpiece mounting fixture 182 (Figure 6) for maintaining vacuum coupling of the workpiece 186 to the workpiece mounting fixture 182 when the pallet 160 is transported between pallet stations 300 by the transport device 400.

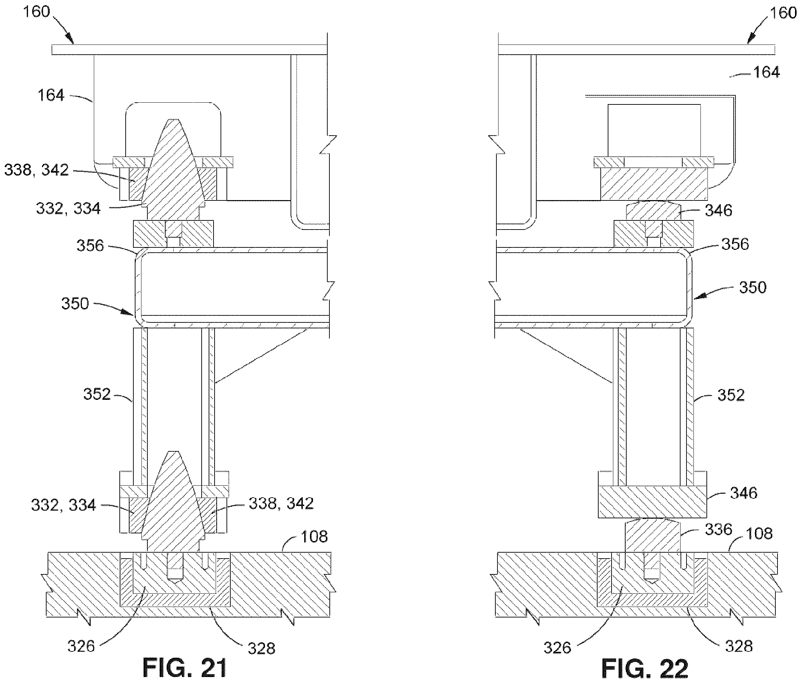

Referring to Figures 11-14, shown in Figure 11 is an exploded view of example of a cone system 322 that is mountable to the floor 108 of the manufacturing cell 102. The cone system 322 is part of a locating system 316 that contains exactly three locating points 321, including two locating cones 332, 334 and a tertiary locating element 335, arranged in a triangular pattern. However, the locating system 316 may includes more than three locating points 321. The locating cones of the cone system 322 include a primary locating cone 332, and a secondary locating cone 334. The tertiary locating element 335 may be configured as a rest button 336 as shown. The primary locating cone 332, the secondary locating cone 334, and the tertiary locating element 335 (e.g., the rest button 336) may each be removably couplable to an embedded plate 326 (Figure 21) that may be bonded within a cored hole 328 (Figure 21) formed in the floor 108 of the manufacturing cell 102. The primary locating cone 332 and the secondary locating cone 334 may each have a generally conical outer surface (e.g., a simple cone shape, an ogive shape, or other rounded conical shape - Figure 21), and the rest button 336 may have at least a partial spherical outer surface (e.g., Figure 22). The cone system 322 is part of a three-point locating system 320 for accurately and repeatably locating and orienting a station frame 350 on the floor 108 of the manufacturing system 100 at one of the pallet stations 300.

Figure 12 shows the primary locating cone 332, the secondary locating cone 334, and the rest button 336 threadably engaged respectively to the embedded plates 326 in the floor 108. Also shown in Figures 11 and 12 is a utilities pit 310 through which the pallet station 300 and/or the station frame 350 may have access to various utilities, such as a factory vacuum pressure source 116, a factory compressed air source 118, controller input/output lines, and/or electrical power. In some examples of the manufacturing cell 102, each one of the pallet stations 300, including the first and second processing stations 306, 308 (Figures 1-2), the feed stations 302 (Figures 1-2, and the buffer queuing stations 304 (Figures 1-2, may include a cone system 322 to engage with the cup system 324 of any one of the pallets 160, to thereby enable any pallet 160 to be precisely located relative to the floor 108 the manufacturing cell 102. In other examples of the manufacturing cell 102, only the processing stations 306, 308 near robotic devices 200 may have a cone system 322, and the remaining pallet stations 300 may be devoid of a cone system 322.

Figure 13 shows an example of a station frame 350 mounted to the floor 108 of the manufacturing cell 102 via a cup system 324 (Figure 18). In the example, shown, the station frame 350 includes three station frame legs 352 extending downwardly from a station frame panel 356. The cup system 324 of the station frame 350 is similar to the cup system 324 of the pallet 160. The cup system 324 includes two locating cups 338, 342 (Figure 18) and a tertiary locating feature 345 (Figure 18) arranged in a triangular pattern that is complementary to the triangular pattern of the cone system 322. The tertiary locating feature 345 may be configured as flat pad 346. The locating cups 338, 342 and the tertiary locating feature 345 (e.g., the flat pad 346) may be mounted on the bottom of the station frame legs 352 of the station frame 350. The primary locating cup 338, the secondary locating cup 342, and the flat pad 346 may be configured to engage respectively with the primary locating cone 332, the secondary locating home, and the rest button 336 of the cone system 322. To secure the station frame 350 to the floor 108, a threaded insert 330 may be embedded in the floor 108 at the location of each cored hole 328. Each one of the station frame legs 352 may include a 1eg tab 354 protruding laterally from the lower end of each station frame leg 352. Each leg tab 354 may include a hole for receiving a mechanical fastener (e.g., a bolt) for threadably engaging the threaded insert 330 for securing the station frame 350 to the floor 108 when the cup system 324 of the station frame is mounted to the cone system 322 of the floor 108.

Figure 14 shows an example of a pallet 160 mounted to the station frame 350 of Figure 13 via the three-point locating system 320, and which is configured similar to the above-described three-point locating system 320 for coupling the station frame 350 to the floor 108 of the manufacturing cell 102. In this regard, the station frame 350 may include a cone system 322 as shown in Figure 13 and described above, and which protrudes upwardly from the station frame panel 356. The pallet 160 may include a cup system 324 as described above. The cup system 324 of the pallet 160 may be mounted to an underside of the pallet 160, and may engage with the cone system 322 protruding upwardly from the station frame panel 356. Advantageously, the three-point locating system 320 is configured to precisely and repeatably position each pallet 160 relative to the robotic device 200 (Figure 6) within a relatively tight tolerance (e.g., within 0.010 inch) of a nominal position of the pallet 160 at the pallet station 300.

Although the cone system 322 is described as including two cones and one rest button, in an alternative example (not shown) the cone system 322 may include exactly three spheres configured to engage respectively with the primary locating cup 338, the secondary locating cup 342, and the flat pad 346 of the cup system 324. In a still further alternative example, instead of a cone system 322 being mounted to the floor 108 the manufacturing cell 102 and a cup system 324 being mounted to the bottom of the station frame legs 352, a cone system 322 may be mounted to the bottom of the station frame legs 352, and a cup system 324 may be mounted to the floor 108 the manufacturing cell 102. Likewise, instead of a cone system 322 protruding upwardly from the station frame panel 356 and a cup system 324 mounted to an underside of the pallet 160, the cone system 322 may be mounted to an underside of pallet 160, and the cup system 324 may be mounted to the station frame panel 356.

Referring to Figures 15-16, shown in Figure 15 is an example of a station frame 350 configured to be mounted to the floor 108 (Figure 14) of the manufacturing cell 102 via the above-described three-point locating system 320. As mentioned above, at each pallet station 300 (Figures 1-2) including at the first and second processing station 306, 308 (Figures 1-2) of a robotic device 200 (Figures 1-2), a station frame 350 may be engaged to the floor 108 of the manufacturing cell 102 via a three-point locating system 320 as shown in Figure 13. In addition, any one of the pallets 160 may be configured to be mounted to the station frame 350 at any pallet station 300, including at the first and second processing stations 306, 308, via a three-point locating system 320 as shown in Figure 14.

In Figures 15-16, the station frame 350 may be constructed of a rigid material such as metallic material (e.g., steel), and may include a station frame panel 356 supported on the station frame legs 352. The station frame panel 356 may be conspicuously marked and/or painted in bright colors to promote human awareness. A set of four tooling features 358 may be permanently mounted on the top side of the station frame 350. In the example shown, the tooling features 358 are configured as balls or spheres. However, the tooling features 358 may be provided in any one of a variety of alternative shapes, sizes, and configurations. The tooling features 358 may protrude upwardly from the station frame panel 356, and may be used to verify, via a laser scanning system (not shown) or mechanical probing system (not shown), that the station frame 350 is located and oriented within a predetermined tolerance (e.g., within 0.010 inch) of a nominal position of the stations frame 350, relative to a world coordinate system (not shown) of the manufacturing cell 102.

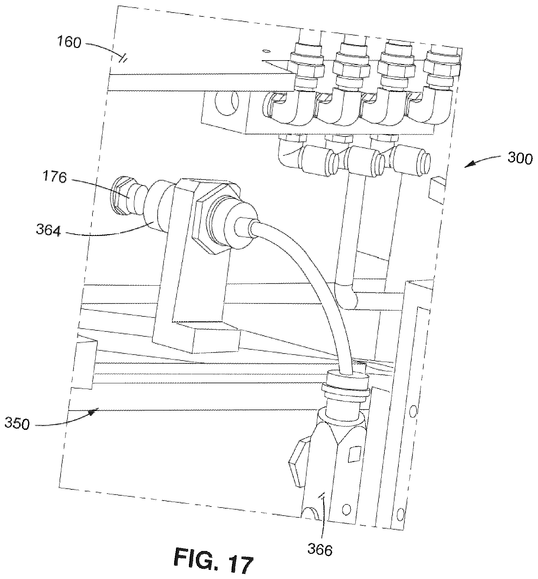

Referring to Figures 16-17, any one of the pallet stations 300 (including the processing stations 306, 308 in Figures 4A-4C) disclosed herein may include an RFID read/write head 364 coupled to an electrical connector 366, and powered by an electrical power cable (not shown) extending upwardly from the utilities pit 310 (Figure 15) in the floor 108 of the manufacturing cell 102. The RFID read/write head 364 may be configured to receive data from an RFID tag 176 (Figure 17) mounted to the underside of each pallet 160, as a means for positively identifying each pallet 160, and for storing information about workpieces 186 that are mounted on the pallet 160 that is placed or located at the pallet station 300. Any one of the pallet stations 300 (including the processing stations 306, 308 in Figures 4A-4C) and/or any one of the station frames 350 disclosed herein may include a pallet presence switch 360 for detecting when a pallet 160 is placed or located at a pallet station 300, such as when a pallet 160 is loaded on the station frame 350.

In addition, in Figures 15-18, any one of the pallet stations 300 and/or the station frames 350 disclosed herein may include a station vacuum connector 369, such as a station vacuum cone 370, for vacuum coupling with a pallet vacuum connector 177, such as a pallet vacuum cup 178 (Figure 18), that may be included with each pallet 160 for maintaining vacuum coupling of the workpiece 186 (Figure 6) to the workpiece mounting fixture 182 (Figure 6), as described in greater detail below. In this regard, the pallet station 300 and/or the station frame 350 may also include a mechanical vacuum valve 362 for actuating the factory vacuum pressure source 116 when the pallet vacuum connector 177 (Figure 18) engages with the station vacuum connector 369 after the cup system 324 (Figure 18) of the pallet 160 engages with the cone system 322 (Figure 13) of the station frame 350 as the pallet 160 placed at the station frame 350, as mentioned above and described in greater detail below.

Also shown in Figure 16 is a compressed air conduit 368 (Figure 15) extending upwardly out of the utilities pit 310 (Figure 15) in the floor 108. The compressed air conduit 368 may be fluidly coupled to a factory compressed air source 118, and may have a terminal end that is directed toward the station vacuum cone 370. During the process of locating a pallet 160 at a pallet station 300, such as by lowering a pallet 160 onto a station frame 350 via a transport device 400, the factory compressed air source 118 may be commanded (e.g., by the controller 104 of the manufacturing cell 102) to direct a burst of compressed air from the compressed air conduit 368 onto the station vacuum cone 370 as a means to blow debris (e.g., carbon dust, metallic dust, etc.) off of the station vacuum cone 370 prior to the pallet vacuum cup 180 (Figure 18) being lowered into engagement with the station vacuum cone 370, thereby ensuring a tight seal between the station vacuum cone 370 and the pallet vacuum cup 180.

Referring to Figures 18-19, shown is an underside of an example of a pallet 160. In any one of the manufacturing system 100 examples disclosed herein, the pallet 160 may be constructed of a rigid material such as steel, and may include a pallet base panel 162 having a plurality of slotted holes (not shown) and/or tapered holes (not shown) to attach any one of a variety of different configurations of workpiece mounting fixtures 182 (Figure 16). The pallet base panel 162 may be supported by a pallet framework 164 (e.g., ribs, webs) to provide a high-stiffness and high-strength structure to which one or more workpiece mounting fixtures 182 may be fastened. In the example of Figures 6-10, the pallet 160 may include a pair of fork tubes 166 configured to received a pair of vehicle forks 408 (Figure 10). However, in an alternative example (e.g., Figures 4A-4C), the pallet 160 may be provided without fork tubes 166, and the transport device 400 may be provided without vehicle forks 408. In one such example, the transport device 400 may be configured to move underneath the pallet 160 at a station frame 350, and vertically move the pallet 160 onto and off of the station frame 350. In another example, the transport device 400 (e.g., a drone, an overhead crane, etc.) may be configured to attach to the pallet 160 from above, and may vertically move the pallet 160 onto and off of the pallet stations 300.

As described above, the pallet 160 includes the above-mentioned cup system 324 for engaging the cone system 322 (Figure 15) of a station frame 350, or engaging the cone system 322 associated with the above-described conveyor system 420 (e.g., Figures 2A, 4A-4C, and 5A). In Figure 18, the cup system 324 includes the primary locating cup 338, the secondary locating cup 342, and the tertiary locating feature 345, such as a flat pad 346. The primary locating cup 338 may be centered on the pallet proximal end of the pallet 160. The pallet proximal end may be described as the end into which vehicle forks 408 are inserted into the fork tubes 166. The secondary locating cup 342 and the flat pad 346 may each be respectively located at the pallet distal end opposite the pallet proximal end. However, to match the arrangement of the primary locating cone 332, secondary locating cone 334, and tertiary locating element 335 of the locating system 316 in Figures 4A-4C, the primary locating cup 338 and the secondary locating cup 342 may be located on opposite ends of the pallet 160 and on one side of the pallet 160, and the tertiary locating feature 345 may be located at an approximate mid-point of the opposite side of the pallet 160.

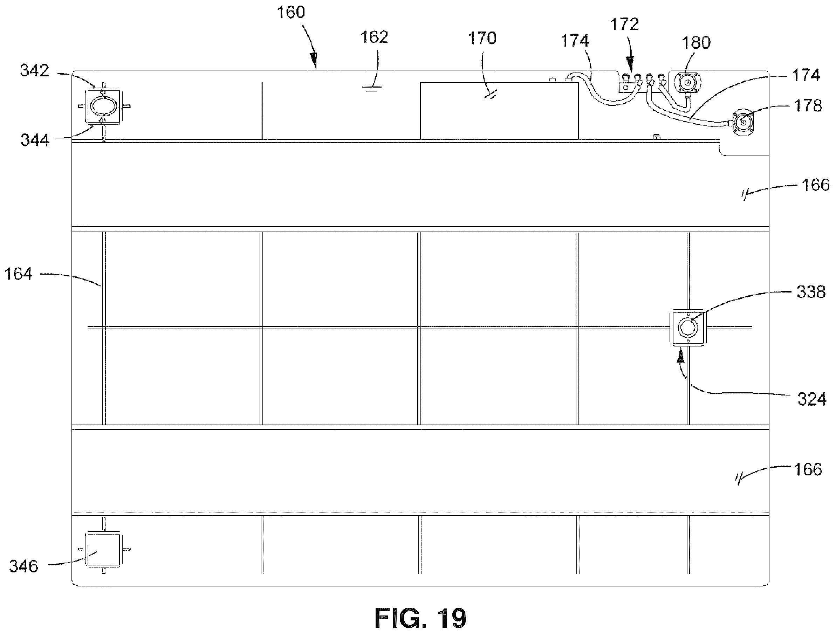

As shown in Figure 19, the primary locating cup 338 of any of the pallet 160 configurations disclosed herein may be configured as a circular tapered hole 340. The secondary locating cup 342 of any of the pallet 160 configurations disclosed herein may be configured as a slotted tapered hole 344. The slotted tapered hole 344 may have a slot axis (not shown) that is oriented perpendicular to an axis passing through the center of the slotted tapered hole 344 and the center of the tertiary locating feature 345 (e.g., the flat pad 346). The tertiary locating feature 345 or flat pad 346 may have a planar outer surface (e.g., Figure 22). In any of the manufacturing system 100 examples disclosed herein, the engagement of the primary locating cone 332 (Figure 15) with the circular tapered hole 340 of the primary locating cup 338 may constrain the pallet 160 from moving laterally at the primary locating cone 332. In addition, in any of the manufacturing system 100 examples disclosed herein, the engagement of the secondary locating cone 334 (Figure 15) with the slotted tapered hole 344 of the secondary locating cup 342 may constrain the pallet 160 from pivoting about the primary locating cone 332, while accommodating slight differences in the distance between the primary locating cone 332 and the secondary locating cone 334 on different pallets 160. Furthermore, in any of the manufacturing system 100 examples disclosed herein, the engagement of the tertiary locating element 335 (e.g., the rest button 336) with the tertiary locating feature 345 (e.g., the planar outer surface of the flat pad 346) may constrain the orientation of the pallet 160, such as maintaining the pallet 160 in a horizontal orientation.

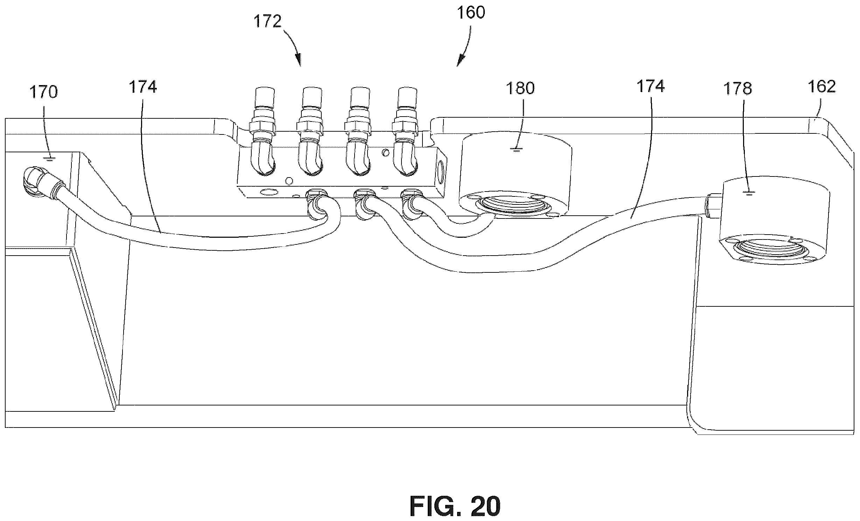

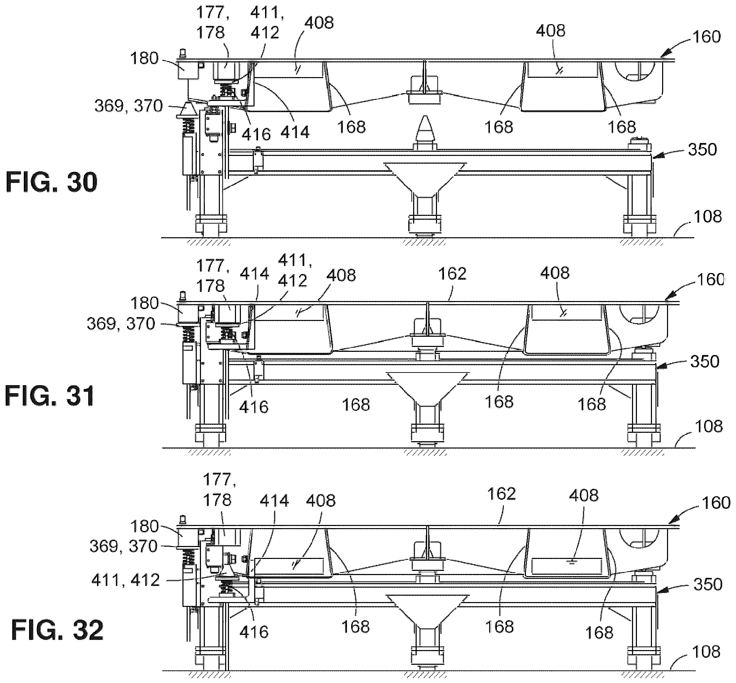

Referring still to Figures 18-20, as mentioned above, each pallet 160 may include one or more pallet vacuum connectors 177, such as pallet vacuum cups 178, 180 , each of which may be fluidly coupled to a vacuum manifold 172 via vacuum conduits 174. The transport devices 400 (Figure 10) and the pallet stations 300 (Figure 15), including the first and second processing stations 306, 308 (Figures 1-2), may each have a vacuum pressure source 114 (Figure 15) fluidly couplable to the apertures 184 (Figure 6) of the workpiece mounting fixture 182 (Figure 6) for generating vacuum pressure at the apertures 184 to thereby vacuum couple the workpiece 186 to the mounting surface 188 (Figure 6). The pallet 160 may also include a vacuum reserve tank 170 fluidly coupled to the vacuum manifold 172 via a vacuum conduit 174. As described in greater detail below, a pallet vacuum connector 177 (e.g., pallet vacuum cup 178) is configured to mate with the transport device vacuum connector 411 (e.g., transport device vacuum cone 412 - Figures 10 and 32) when the pallet 160 is transported by a transport device 400. The pallet vacuum connector 177 (e.g., pallet vacuum cup 180) is configured to mate with the station vacuum connector 369 (e.g., station vacuum cone 370 - Figure 16) when the pallet 160 is mounted on a station frame 350 (e.g., Figure 14), or when a pallet 160 is placed at a processing station 306, 308 (e.g., Figures 4B-4C). In the event of a loss of vacuum pressure from the factory vacuum pressure source 116 (Figure 15) and/or from the transport device vacuum source 410 (Figure 10), the vacuum reserve tank 170 may provide backup vacuum pressure to the apertures 184 to maintain vacuum coupling of the workpiece 186 to the workpiece mounting fixture 182.

Referring to Figures 21-22, shown in Figure 21 is a sectional view of an example of the primary or secondary locating cup 338, 342 of the station frame 350 respectively mounted on the primary or secondary locating cone 332, 334 on the floor 108 of the manufacturing cell 102. The primary and secondary locating cups 338, 342 of the station frame 350 may each be coupled to a bottom of a station frame leg 352. As mentioned above, the primary and secondary locating cones 332, 334 may be threadably engaged respectively to embedded plates 326 that are adhesively bonded within a cored hole 328 in the floor 108. Also shown in Figure 21 is the primary or secondary locating cup 338, 342 of the pallet 160 respectively mounted on the primary or secondary locating cone 332, 334 of the station frame 350. The primary and secondary locating cups 338, 342 of the pallet 160 may be coupled to the pallet framework 164 on the underside of the pallet 160. The primary and secondary locating cones 332, 334 of the station frame 350 may protrude upwardly from the station frame panel 356.

Figure 22 is a sectional showing an example of the flat pad 346 of the station frame 350 resting on the rest button 336 on the floor 108 of the manufacturing cell 102 via an embedded plate 326. The flat pad 346 of the station frame 350 may be coupled to the bottom of a station frame leg 352. The rest button 336 may be threadably engaged to an embedded plate 326 bonded within a cored hole 328 in the floor 108. Also shown is the flat pad 346 of the pallet 160 mounted on the rest button 336 of the pallet station 300. The flat pad 346 of the pallet 160 may be coupled to the pallet framework 164 on the underside of the pallet 160. The rest button 336 of the station frame 350 may protrude upwardly from the station frame panel 356.

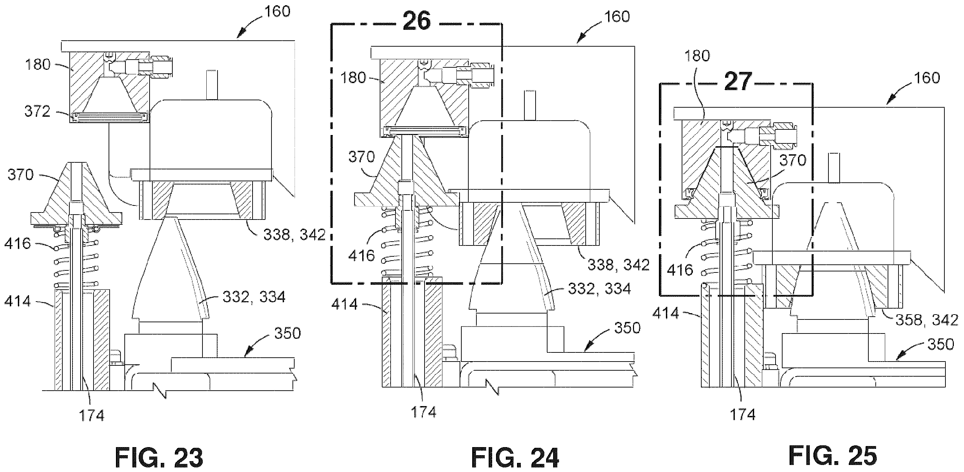

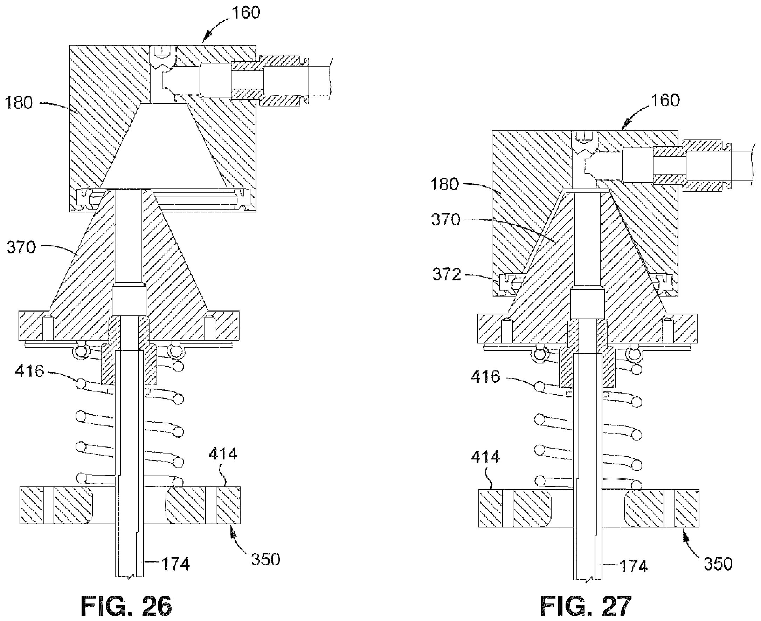

Referring to Figures 23-27, shown in Figures 23-25 are sectional views of a portion of a pallet 160 and a station frame 350 as the pallet 160 is lowered onto the station frame 350, and illustrating the process of the primary or secondary locating cup 338, 342 of the pallet 160 respectively engaging the primary or secondary locating cone 332, 334 of the station frame 350, and also illustrating the engagement of the pallet vacuum cup 180 of the pallet 160 with a station vacuum cone 370 of the station frame 350. Figures 26-27 are magnified views showing the engagement of the pallet vacuum cup 180 with the station vacuum cone 370. As described above, each of the pallets 160 in Figures 23-27 has a pallet vacuum cup 180 which may be mounted to the underside of the pallet 160 (Figures 18-19). The pallet stations 300 in Figures 23-27, including the first and second processing stations 306, 308 (Figures 1-2), may each include a station vacuum cone 370. The station vacuum cone 370 may be fluidly coupled to a vacuum conduit 174 extending out of the utilities pit 310 (Figure 15) at each pallet station 300. The vacuum conduit 174 may be fluidly coupled to a factory vacuum pressure source 116 (e.g., a factory vacuum pump).

As shown in Figures 23- 27, the station vacuum cone 370 is configured to sealingly engage with the pallet vacuum cup 180 when the transport device 400 places the pallet 160 at the first or second processing station 306, 308, thereby providing vacuum pressure at the apertures 184 (Figure 6) of the mounting surface 188 (Figure 6) of the workpiece mounting fixture 182 for holding the workpiece 186 and fixed position when the workpiece 186 is operated on by the robotic device 200. The station vacuum cone 370 may be supported on a cone spring 416 mounted on a mounting bracket 414, which is mounted to the station frame 350. The pallet vacuum cup 180 may include a circumferential seal 372 (e.g., a wiper seal) located at the base of the pallet vacuum cup 180. The circumferential seal 372 may facilitate sealing engagement of the pallet vacuum cup 180 to the station vacuum cone 370 when the pallet 160 is lowered onto the station frame 350 at the first or second processing station 306, 308. The cone spring 416 is configured to urge the station vacuum cone 370 upwardly toward the pallet vacuum cup 180, to thereby maintain sealing engagement of the outer surface of the station vacuum cone 370 with the circumferential seal 372. In addition, the cone spring 416 may allow the station vacuum cone 370 to laterally move into alignment with the pallet vacuum cup 180 to facilitate sealing engagement therebetween.

As shown in Figure 23, when the transport device 400 transports a pallet 160 to a new pallet station 300, the pallet 160 may initially be slightly laterally offset from the station frame 350. More specifically, the cup system 324 (Figure 18) of the pallet 160 may initially be laterally offset from the cone system 322 (Figure 13) of the station frame 350. As a result, the pallet vacuum cup 180 may also be laterally offset from the station vacuum cone 370. The height of the primary and secondary locating cones 332, 334 may be greater than the height of the station vacuum cone 370, thereby causing the primary and secondary locating cones 332, 334 to respectively engage with the primary and secondary locating cups 338, 342 prior to engagement of the station vacuum cone 370 with the pallet vacuum cup 180.

Figure 24 shows the pallet 160 further lowered onto the station frame 350, and illustrating the further engagement of the primary locating cup 338 (or secondary locating cup 342) of the pallet 160 with the primary locating cone 332 (or secondary locating cone 334) of the station frame 350. Figure 26 is a magnified view showing the pallet vacuum cup 180 initially laterally offset from the station vacuum cone 370 during the process of lowering the pallet 160 onto the station frame 350. As a result of the conical shape of the primary and secondary locating cones 332, 334, the lowering of the pallet 160 onto the station frame 350 causes the side surfaces of the primary or secondary locating cones 332, 334 to engage the side surfaces respectively of the primary and secondary locating cups 338, 342, thereby laterally shifting the pallet 160 causing the pallet vacuum cup 180 to move toward axial alignment with the station vacuum cone 370, similar to the above-described self-alignment process associated with the conveyor system 420 arrangement illustrated in Figures 4B-4C.

Figure 25 shows the pallet 160 lowered onto the station frame 350, and illustrating the full engagement of the primary locating cup 338 (or secondary locating cup 342) of the pallet 160 with the primary locating cone 332 (or secondary locating cone 334) of the station frame 350, and allowing the pallet vacuum cup 180 to engage with the station vacuum cone 370. Figure 27 is a magnified view showing the pallet 160 completely lowered onto the station frame 350, and the pallet vacuum cup 180 sealed to the station vacuum cone 370 via the circumferential seal 372. As mentioned above, when a pallet 160 is lowered onto a station frame 350, the mechanical vacuum valve 362 (Figure 16) may be activated to thereby fluidly couple the pallet vacuum cup 180 to the factory vacuum pressure source 116 (Figure 15), and resulting in vacuum pressure at the apertures 184 (Figure 6) of the workpiece mounting fixture 182.

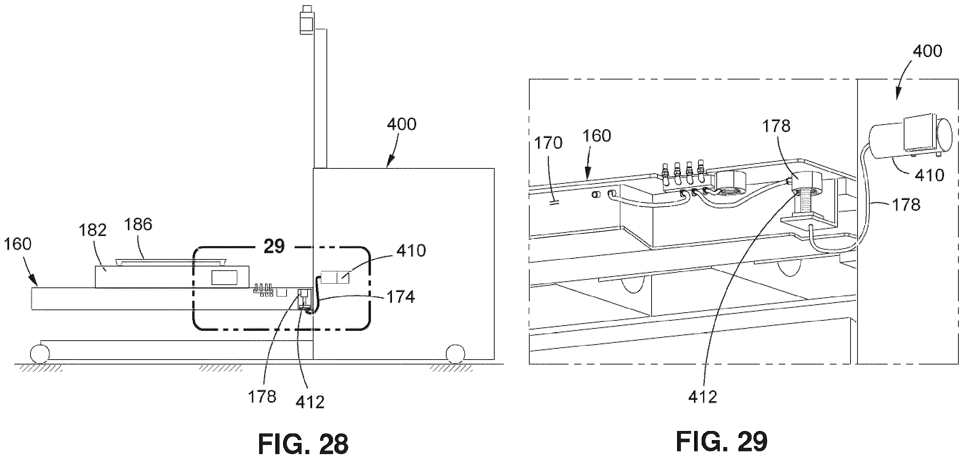

Referring to Figures 28- 32, shown in Figure 28 is an example of a transport device 400 transporting a pallet 160 supporting a workpiece 186 mounted on a workpiece mounting fixture 182. As mentioned above, the transport device 400 may include one or more transport device vacuum sources 410 (e.g., vacuum pumps). The transport device 400 may also include a transport device vacuum cone 412 (Figure 32) which may be fluidly coupled to the one or more transport device vacuum sources 410 via a vacuum conduit 174. In the example of Figures 28-29, the transport device vacuum cone 412 may be mounted to the transport device 400. For example, the transport device vacuum cone 412 may be mounted to one of the vehicle forks 408 via a mounting bracket 414. The transport device vacuum cone 412 may be supported by a cone spring 416 similar to the mounting arrangement of the station vacuum cone 370. As described above, each of the pallets 160 may have a pallet vacuum connector 177. In Figure 16, the pallet vacuum connector 177 is a pallet vacuum cup 178 opening downwardly and located on an underside of the pallet base panel 162.

Figure 30 shows a pallet 160 during the initial stage of being lowered by a transport device 400 onto a station frame 350. The pallet vacuum cup 178 of the pallet 160 is initially engaged to the transport device vacuum cone 412 of the transport device 400, while the pallet vacuum cup 180 of the pallet 160 is vertically separated from the station vacuum cone 370 of the station frame 350, similar to the above-described arrangement shown in Figure 23. Figure 31 shows the pallet 160 further lowered onto the station frame 350, and illustrating the pallet vacuum cup 178 of the pallet 160 still engaged to the transport device vacuum cone 412 of the transport device 400, and also showing the pallet vacuum cup 180 of the pallet 160 engaged to the station vacuum cone 370 of the station frame 350 similar to the arrangement shown in Figure 27. Figure 32 shows the pallet 160 completely lowered onto the station frame 350. The vehicle forks 408 are further lowered, causing the pallet vacuum cup 178 of the pallet 160 to disengage from the transport device vacuum cone 412 of the transport device 400, while the pallet vacuum cup 180 of the pallet 160 remains engaged to the station vacuum cone 370. Advantageously, the arrangement of the vacuum cups 178, 180 and vacuum cones 370, 412 allows for uninterrupted vacuum pressure at the mounting surface 188 of the workpiece mounting fixture 182 during the transfer of the pallet 160 onto and off of the station frame 350.

When it is time for the pallet 160 to be removed the station frame 350, a transport device 400 (Figure 10) may approach the pallet 160 to cause the vehicle forks 408 to be inserted into the fork tubes 166 of the pallet 160. As shown in Figures 30-32, each of the fork tubes 166 has opposing side walls 168 that are narrower at the top of the fork tubes 166 than at the bottom of the fork tubes 166, and causing the pallet 160 to self-center on the vehicle forks 408 when the vehicle forks 408 are inserted into the fork tubes 166 and vertically raised into engagement with the pallet 160 to lift the pallet 160 off of the pallet station 300. As the vehicle forks 408 are raised, the transport device vacuum cone 412 is configured to sealingly engage with the pallet vacuum cup 178, after which the pallet vacuum cup 180 disengages from the station vacuum cone 370. The engagement of the transport device vacuum cone 412 to the pallet vacuum cup 178 fluidly couples the transport device vacuum cone 412 to the transport device vacuum pump 410. The transport device vacuum pump 410 (Figure 10) provides vacuum pressure at the apertures 184 of the workpiece mounting fixture 182 for maintaining vacuum coupling of the workpiece 186 to the mounting surface 188 (Figure 6) of the workpiece mounting fixture 182 when the pallet 160 is transported by the transport device 400.

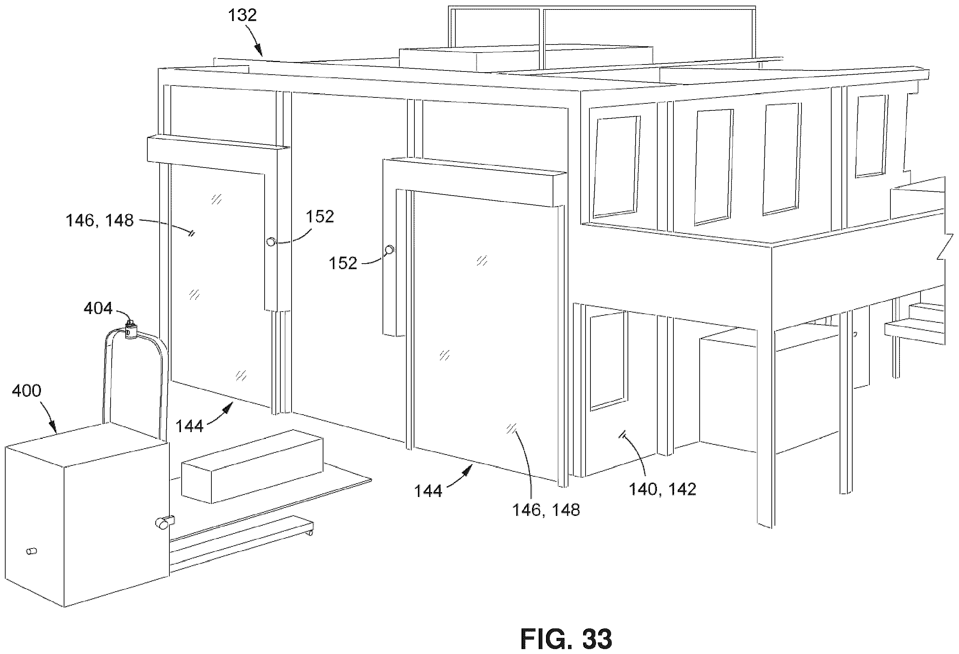

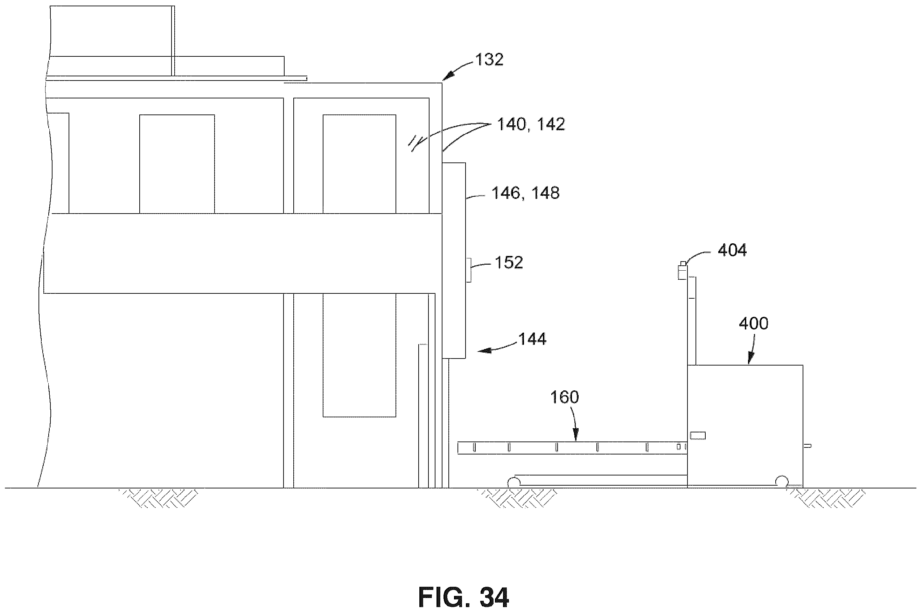

Referring to Figures 33-34, shown is an example of a transport device 400 approaching an entrance 144 to the machining subcell 132. As mentioned above, a manufacturing cell 102 may include any number of subcells 130, each having a subcell boundary 140 at least partially enclosing the subcell 130. The subcell boundary 140 may separate the subcell 130 from the remainder of the manufacturing cell 102, and may prevent human access into the subcell 130 for safety reasons, and may also prevent the escape of debris such as machining dust (e.g., carbon dust) that may be generated during manufacturing operations (e.g., trimming, sanding, etc.) By the one or more robotic devices 200 in the machining subcell 132.

In any one of the manufacturing system 100 examples disclosed herein, the subcell boundary 140 has at least one entrance 144 for passage of a transport device 400 into and out of the subcell 130. At least one of the entrances 144 may have a pass-through sensor 152 In addition, at least one of the entrances 144 may have an entrance barrier 146 (e.g., a subcell door 148) that is selectively configurable to either prevent or allow passage of the transport device 400 through the entrance 144 for either entering or exiting the subcell 130. The pass-through sensor 152 may be a laser scanner or a curtain on an exterior side and/or an interior side of the subcell boundary 140 proximate the entrance 144. The subcell boundary 140 may comprise physical subcell walls 142, physical fencing, a physical curtain, or other physical boundary structure. As mentioned above, the entrance barrier 146 may be a physical subcell door 148 (e.g., a roll-up door, a side-hinged door, a gate, etc.). Alternatively or additionally, the entrance barrier 146 may be a non-physical barrier. For example, each entrance barrier 146 may include an optical safety curtain (not shown) generated by one or more door laser scanners (not shown) configured to scan in a two-dimensional plane across the entrance 144. The transport devices 400 may each have physical features (not shown) that penetrate the optical safety curtain at specific locations and in specific order as the transport device 400 passes through the entrance, as a means to confirm that a transport device 400 is entering the subcell, and not a person.

As mentioned above, for transport devices 400 configured as a vehicle, the transport device 400 may have at least one vehicle signaling device 404 (e.g., a laser beacon, a wireless transmitting device, etc.) configured to emit or transmit a transport device signal (e.g., a laser beam, a wireless signal, etc.). The pass-through sensor 152 at the entrance 144 to the subcell 130 may be configured to sense or receive the transport device signal when the transport device 400 approaches or is near the entrance 144 to the subcell 130, and/or is within a predetermined distance (e.g., 10 feet) of the entrance 144. For examples where the pass-through sensor 152 is a wireless receiver configured to receive a wireless signal transmitted by a transport device-mounted wireless transmitting device, the wireless signal may be transmitted over a dedicated wifi network. The wireless signal may include a request for opening the entrance 144.

The controller 104 (Figure 2), in response to the pass-through sensor 152 sensing or receiving a transport device signal, may determine whether or not to allow the transport device 400 to pass through the entrance 144. If allowed to pass, the controller 104 may command the entrance barrier 146 to allow passage of the transport device 400 through the entrance 144. For example, in the case of the machining subcell 132, when the pass-through sensor 152 senses the transport device signal of an approaching transport device 400, the controller 104 determine whether to allow the transport device 400 to pass through the entrance 144, and may open the subcell door 148 to allow the transport device 400 to either enter or exit the machining subcell 132, depending on whether the transport device 400 is inside or outside of the machining subcell 132. In the case of the inspection subcell 134, the controller 104 may allow a transport device 400 to pass through the entrance 144 when the pass-through sensor 152 of the inspection subcell 134 receives the transport device signal of an approaching transport device 400. After the transport device 400 has passed through the entrance 144 and is moving away from the entrance 144, the controller 104 may reactivate the entrance barrier 146 (e.g., close the subcell door 148) to prevent passage through the entrance 144. The entrance 144 may remain closed at all other times, unless manually commanded to open by an operator.

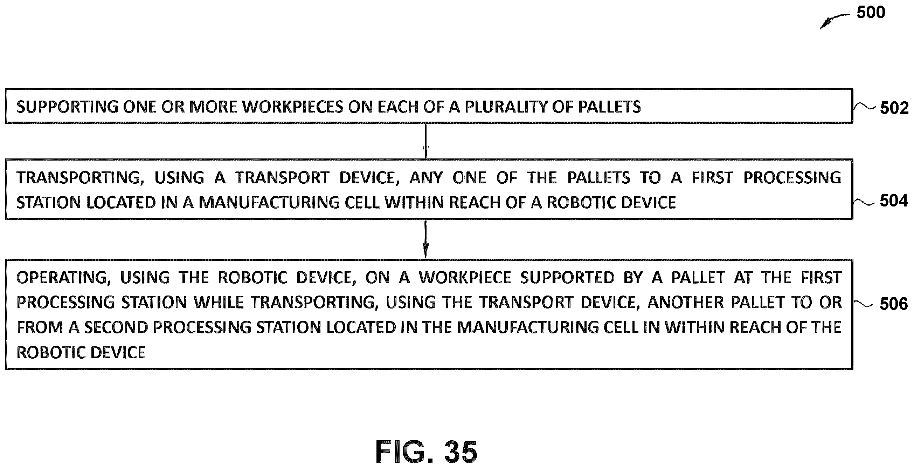

Referring to Figure 35, shown is a flowchart of steps of a method 500 of processing workpieces 186 using any one of the manufacturing cell 102 examples described above. Step 502 of the method 500 includes supporting one or more workpieces 186 on each of a plurality of pallets 160. As mentioned above, each pallet 160 may include one or more workpiece mounting fixtures 182 which are each pallet 160 is configured to support one or more workpieces 186. Each of the workpieces 186 may be loaded (e.g., by a technician) onto the workpiece mounting fixture 182 of a pallet 160 prior to the pallet 160 being loaded (e.g., via a manually-operated forklift or crane) onto a feed station 302.

Step 504 of the method 500 includes transporting, using a transport device 400, any one of the pallets 160 to a first processing station 306, which may be located within reach of a robotic device 200. As described above, the manufacturing cell 102 includes one or more transport devices 400 configured to transport pallets 160 between different pallet stations 300. As described above, the one or more transport devices 400 may comprise overhead equipment such as cranes or gantries (not shown), or drones (not shown). In another example, the transport devices 400 may comprise the above-described floor-mounted conveyor system 420 (Figures 2A, 4A-4C, and 5A), and step 504 may comprise transporting the pallets 160 using a plurality of conveyor sections 422 extending along transport device routes between the plurality of pallet stations 300.

In an example where the transport devices 400 are vehicles, the process of transporting a pallet 160 may include inserting a pair of vertically movable vehicle forks 408 of a transport device 400 into a pair of fork tubes 166 of the pallet 160. The pallet 160 may be supported on a station frame 350 at the feed station 302. The method may include transporting any one of the plurality of pallets 160 to and/or from a feed station 302, which is configured to support any one of the pallets 160 prior to pickup or engagement by a transport device 400 for transporting the pallet 160 to one or more processing stations 306, 308. The method may also include transporting any one of the pallets 160 to and/or from a buffer queuing station 304 configured to temporarily support any one of the pallets 160 in between processing operations at one of the processing stations 306, 308.

As mentioned above, the opposing side walls 168 of each fork tube 166 may be narrower at the top of the fork tube 166 than at the bottom. The method may include raising the vehicle forks 408 while inside the fork tubes 166 to thereby lift the pallet 160, and causing each vehicle fork 408 to engage with one of the side walls 168 of the fork tubes 166. As a result, the method includes self-centering the pallet 160 on the pair of vehicle forks 408 due to engagement of the vehicle forks 408 with the side walls 168 of the fork tubes 166 when raising the vehicle forks 408 inside the fork tubes 166 to lift the pallet 160. Upon arriving at another pallet station 300 such as a first processing station 306, the method may include lowering the vehicle forks 408 to place the pallet 160 on the station frame 350 at the first processing station 306.

Step 506 of the method 500 includes operating, using the robotic device 200, on a workpiece 186 supported by the pallet 160 at the first processing station 306 while transporting, using a transport device 400, another pallet 160 to or from a second processing station 308, which may be located within reach of the robotic device 200. The method may include controlling, using a controller 104 of the manufacturing cell 102, the movement of the transport devices 400 and the robotic device 200 in a manner allowing the robotic device 200 to continuously operate on workpieces 186 during the movement of the pallets 160 by a transport device 400 to and from a second processing station 308. In this manner, the manufacturing system 100 significantly reduces or eliminates human intervention in workpiece transporting, handling, and processing (e.g., machining, inspection, cleaning, etc.), which advantageously increases the consistency of workpiece processing, and also reduces operational time and labor cost.

The method 500 may include coupling, using at least one locating system 316 (e.g., a three-point locating system 320), the pallet 160 to the first and/or second processing station 306, 308 in a precise and repeatable location and orientation relative to the robotic device 200. In this regard, the method may include coupling any pallet 160 to any one of the pallet stations 300 using the above-described three-point locating system 320. As indicated above, each one of the pallet stations 300, including the feed stations 302 and the buffer queuing locations 304, may utilize a three-point locating system 320 for accurately locating pallets 160 at the pallet stations 300. The step of coupling any one of the pallets 160 to either the first or second processing station 306, 308 may include coupling a cup system 324 of a pallet 160 to a cone system 322 included with the first and/or the second processing station 306, 308. As described above, the cone system 322 in one example has a primary locating cone 332, a secondary locating cone 334, and a tertiary locating element 335 (e.g., a rest button 336) arranged in a triangular pattern. The cup system 324 has a primary locating cup 338, a secondary locating cup 342, and a tertiary locating feature 345 (e.g., a flat pad 346) also arranged in a triangular pattern, and configured to engage respectively with the primary locating cone 332, the secondary locating cone 334, and the tertiary locating element 335 of the cone system 322.

As mentioned above, in the example of Figures 2, 4, 5, and 6, each one of the pallet stations 300 has a station frame 350 that may be mounted to the floor 108 of the manufacturing cell 102. In such an arrangement, the method may include mounting, via a three-point locating system 320, a station frame 350 to a floor 108 of the manufacturing cell 102 at each of the first and second processing stations 306, 308, and mounting, via another three-point locating system 320, any one of the pallets 160 to the station frame 350 at each of the first and second processing stations 306, 308. To facilitate the mounting of the station frame 350 to the floor 108 of the manufacturing cell 102, the method may include mounting each of a primary locating cone 332, a secondary locating cone 334, and a rest button 336 to an embedded plate 326 contained with a cored hole 328 formed in the floor 108 of the manufacturing cell 102. The method may further include engaging the primary locating cone 332, the secondary locating cone 334, and the rest button 336 respectively to the primary locating cup 338, the secondary locating cup 342, and the flat pad 346 respectively included with three station frame legs 352 extending downwardly from the station frame 350.

In the example of Figures 4A-4C which has a conveyor system 420 as the transport device 400, the process of coupling a pallet 160 to either the first processing station 306 or the second processing station 308 includes transporting the pallet 160 into one of the processing stations 306, 308 proximate a robotic device 200. The process further includes moving, via locating point actuators 319, the locating points 321 (e.g., the primary locating cone 332, the second locating cone 334, and the tertiary locating element 335 upwardly into engagement respectively with the primary locating cup 338, the secondary locating cup 342, and the tertiary locating feature 345 (e.g., a planar underside) of the pallet 160, and lifting the pallet 160 off of the conveyor belt 426. The locating points 321 may non-movably support the pallet 160 above the conveyor belt 426 in a precise location and orientation relative to the robotic device 200 while the robotic device 200 operates on the workpiece 186.

When loading a pallet 160 onto a station frame 350 or placing a pallet 160 at a pallet station 300 (e.g., at a first or second processing station 306, 308), the method may include, reading, via an RFID read/write head 364 on the station frame 350, an RFID tag 176 included with each pallet 160 to allow the controller 104 to positively identify the pallet 160 that is loaded onto the station frame 350 or placed at the pallet station 300. In addition, the method may include detecting, via a pallet presence switch 360, the presence of the pallet 160 when loading a pallet 160 onto a station frame 350 or placing a pallet 160 at a pallet station 300. Occasionally, the method may include verifying, using a set of tooling features 358 mounted at the pallet station 300 and/or on the station frame 350, the location of the pallet station 300 or station frame 350 relative to a world coordinate system of the manufacturing cell 102.

Step 502 of supporting one or more workpieces 186 on each of the pallets 160 may comprise supporting one or more workpiece mounting fixtures 182 on at least one of the pallets 160. As described above, at least one of the workpiece mounting fixtures 182 may have a mounting surface 188 containing a plurality of apertures 184. The method may include mounting a workpiece 186 on the mounting surface 188 of the workpiece mounting fixture 182. In addition, the method may include vacuum coupling the workpiece 186 to the mounting surface 188 when transporting the pallet 160 (e.g., via a transport device 400) using the vacuum pressure source 114 of the transport device 400 (e.g., a transport device vacuum source 410, such as a vacuum pump), and vacuum coupling the workpiece 186 to the mounting surface 188 when supporting the pallet 160 at the first and/or second processing station 306, 308 using the vacuum pressure source 114 respectively at the first and/or second processing stations 306, 308 (e.g., the factory vacuum pressure source 116).

Vacuum coupling of the workpiece 186 to the mounting surface 188 when transporting the pallet 160 via the transport device 400 may include raising the transport device 400 into engagement with the pallet 160 for lifting the pallet 160 off of the pallet station 300. For example, as mentioned above, the transport device 400 may have a pair of vehicle forks 408 that may be inserted into a pair of fork tubes 166 that may be included with the pallet 160. The transport device 400 also includes a transport device vacuum cone 412 mounted to the transport device 400. The transport device vacuum cone 412 may be mounted on a cone spring 416. The cone spring 416 may urge the transport device vacuum cone 412 upwardly into engagement with the pallet vacuum cup 178 of the pallet 160.

The transport device vacuum cone 412 may be fluidly coupled to the transport device vacuum source 410 (e.g., vacuum pump). The method may include sealingly engaging the transport device vacuum cone 412 with the pallet vacuum cup 178 of the pallet 160 when raising the vehicle forks 408 into engagement with the pallet 160. For example, the method may include sealing, using a circumferential seal 372, the pallet vacuum cup 178 to the transport device vacuum cone 412. The method may include activating the transport device vacuum source 410 to generate vacuum pressure at the apertures 184 of the mounting surface 188 for vacuum coupling the workpiece 186 to the workpiece mounting fixture 182 when the pallet 160 is supported and/or transported by the transport device 400.

Vacuum coupling of the workpiece 186 to the mounting surface 188 when supporting the pallet 160 on the first or second processing station 306, 308 may comprise lowering, using the transport device 400 (e.g., the vehicle forks 408), the pallet 160 onto the first or second processing station 306, 308. As described above, the first and second processing station 306, 308 may each have a station frame 350 having a station vacuum cone 370 fluidly coupled (e.g., via the utilities pit 310) to the factory vacuum pressure source 116. Prior to the pallet vacuum cup 180 being lowered onto the station vacuum cone 370, the method may include directing, using a compressed air conduit 368 at the station frame 350, a burst of compressed air toward the station vacuum cone 370 to remove any debris (e.g., machining dust) that may be on the station vacuum cone 370.

The method may include sealingly engaging, via the circumferential seal 372, the station vacuum cone 370 with the pallet vacuum cup 180 of the pallet 160 when lowering the pallet 160 onto the station frame 350. The method may also include activating the factory vacuum pressure source 116 by triggering the mechanical vacuum valve 362 (Figure 16) to thereby generate vacuum pressure at the apertures 184 of the mounting surface 188 of the workpiece mounting fixture 182 for vacuum coupling the workpiece 186 to the workpiece mounting fixture 182 at one of the first or second processing station 306, 308. To accommodate the potential loss of vacuum pressure provided by the factory vacuum pressure source 116 or by the transport device vacuum source 410, the method may additionally include maintaining vacuum coupling of the workpiece 186 to the mounting surface 188 using a vacuum reserve tank 170 that may be included with the pallet 160.

For examples of the manufacturing cell 102 having a subcell 130 (e.g., machining subcell 132, inspection subcell 134, etc.) that is at least partially enclosed by a subcell boundary 140 (e.g., subcell walls 142, safety fence 154, etc.) as described above, the method may include moving the transport device 400 toward an entrance 144 of the subcell. As described above, the entrance 144 of the subcell 130 may include at least one pass-through sensor 152. In addition, the entrance 144 may include an entrance barrier 146 that is selectively configurable to either prevent or allow passage of the transport device 400 through the entrance 144. As described above, the entrance barrier 146 may be a physical subcell door 148, as may be included with the machining subcell 132. Alternatively, the entrance barrier 146 may be an optical safety curtain (not shown) generated by one or more door laser scanners (not shown), as may be included with the inspection subcell 134.

When a transport device 400 approaches the entrance 144, the method may include emitting, using a vehicle signaling device 404 (e.g., a transport device laser beacon), a transport device signal such as a laser beam. Alternatively, the vehicle signaling device 404 may be a wireless transmitting device (not shown) configured to transmit a wireless signal (i.e., the transport device signal) over a dedicated wifi network. As mentioned above, the wireless signal may include a request for opening the entrance 144. The method may additionally include sensing, using the pass-through sensor 152, the transport device signal when the transport device 400 is within a predetermined distance of the entrance 144 and is facing toward the entrance 144. For example, the pass-through sensor 152 may receive a wireless signal, which may include a request (i.e., to the controller 104) to allow the transport device 400 to pass through the entrance 144. The method may also include commanding, using the manufacturing cell 102 controller 104, in response to the pass-through sensor 152 sensing or receiving the transport device signal, the entrance barrier 146 to allow passage of the transport device 400 through the entrance 144, such as by opening the subcell door 148 of the machining subcell 132, and/or deactivating the door laser scanners of the inspection subcell 134, and/or allowing the transport device 400 to pass through the two-dimensional optical curtain generating by the door laser scanners.

In the manufacturing system 100 as described herein, the transport device 400 may comprise a conveyor system 420 having a plurality of conveyor sections 422 extending along transport device routes 110 between the plurality of pallet stations 300.

In the manufacturing system 100 as described herein, the locating cones 332, 334 may each have a generally conical outer surface 188; and two of the locating cups 338, 342 may comprise, respectively, a circular tapered hole 340, and a slotted tapered hole 344.

In the manufacturing system 100 as described herein, the subcell 130 may comprise at least one of the following: a machining subcell 132 for machining workpieces 186; an inspection subcell 134 for inspecting workpieces 186; and a cleaning subcell 136 for cleaning workpieces 186.

Also disclosed but not claimed herein is a manufacturing cell 102 for processing workpieces 186, comprising: a robotic device 200 configured to operate on a workpiece 186 supported on any one of a plurality of pallets 160, each of the pallets 160 configured to be transported by a transport device 400; a first processing station 306 and a second processing station 308 located within reach of the robotic device 200 and each configured to support any one of the pallets 160 in fixed position relative to the robotic device 200; and a controller 104 configured to coordinate the operation of the manufacturing cell 102 in a manner allowing the robotic device 200 to continuously operate on a workpiece 186 supported by one of the plurality of pallets 160 at the first processing station 306 while another one of the plurality of pallets 160 is transferred to or from the second processing station 308.

In the method of processing workpieces as described herein, transporting the pallets 160 may comprise: transporting the pallets 160 using a conveyor system 420 having a plurality of conveyor sections 422 extending along transport device routes 110 between the plurality of pallet stations 300.

The method of processing workpieces as described herein may further comprise: coupling, using a locating system 316, any one of the pallets 160 to either one of the first and second processing stations 306, 308 in a precise and repeatable location and orientation relative to the robotic device 200.

In the method of processing workpieces as described herein, coupling any one of the pallets 160 to either one of the first and second processing stations 306, 308 may comprise: coupling, using at least one three-point locating system 316, any one of the pallets 160 to either one of the first and second processing stations 306, 308.

In the method of processing workpieces as described herein, coupling any one of the pallets 160 to either one of the first and second processing stations 306, 308 may comprise: coupling a cup system 324, included with each of the pallets 160, to a cone system 322, included with each of the first and second processing stations 306, 308; wherein: the cone system 322 has locating cones 332, 334; and the cup system 324 has locating cups 338, 342 configured to engage respectively with the locating cones 332, 334.

In the method of processing workpieces as described herein, vacuum coupling the workpiece 186 to the mounting surface 188 when supporting the pallet 160 at the first or second processing station 306, 308 may comprise: placing, using the transport device 400, the pallet 160 at the first processing station 306 and/or the second processing station 308, each having a station vacuum connector 369 fluidly coupled to a factory vacuum pressure source 116; sealingly engaging the station vacuum connector 369 with a pallet vacuum connector 177 of the pallet 160 when placing the pallet 160 at the first processing station 306 and/or the second processing station 308; and activating the factory vacuum pressure source 116 to thereby generate vacuum pressure at the apertures 184 of the mounting surface 188 for vacuum coupling the workpiece 186 to the workpiece mounting fixture 182 at the first and/or second processing stations 306, 308.

Additional modifications and improvements of the present disclosure may be apparent to those of ordinary skill in the art. Thus, the particular combination of parts described and illustrated herein is intended to represent only certain examples of the present disclosure and is not intended to serve as limitations of alternative examples or devices within the scope of the invention as defined by the appended claims.

## Claims

1. A manufacturing system (100) for processing workpieces (186), comprising:
a manufacturing cell (102);
a plurality of pallets (160) each configured to support one or more workpieces (186);
at least one robotic device (200) mounted in the manufacturing cell (102) and configured to operate on the one or more workpieces (186);
at least two processing stations (306, 308), including a first processing station (306) and a second processing station (308), each located in the manufacturing cell (102) within reach of the robotic device (200) and each configured to support any one of the plurality of pallets (160) in fixed position relative to the robotic device (200);
a transport device (400) configured to transport any one of the plurality of pallets (160) to and from each of the first processing station (306) and the second processing station (308); and
a controller (104) configured to coordinate the operation of the manufacturing cell (102) in a manner allowing the robotic device (200) to continuously operate on a workpiece (186) supported by one of the plurality of pallets (160) at the first processing station (306) while another one of the plurality of pallets (160) is transferred to or from the second processing station (308).

2. The manufacturing system (100) of Claim 1, wherein the manufacturing cell (102) includes a plurality of pallet stations (300), each configured to support one of the plurality of pallets (160), and wherein the pallet stations (300) are configured as at least one of the following:
a processing station (306, 308);
a feed station (302) configured to support any one of the plurality of pallets (160) prior to transporting of the pallet (160), via the transport device (400), from the feed station (302) to one of the processing stations (306, 308); and
a buffer queuing station (304) configured to temporarily support any one of the pallets (160) in between processing operations at one of the processing stations (306, 308).

3. The manufacturing system (100) of Claim 1 or 2, further comprising:
a locating system (316) configured to couple any one of the pallets (160) to either one of the first and second processing stations (306, 308) in a precise and repeatable location and orientation relative to the robotic device (200), the locating system (316) comprising a three-point locating system (316) having three locating points (321) arranged in a triangular pattern.

4. The manufacturing system (100) of Claim 3, wherein the locating system (316) comprises:
a cone system (322) included with each of the first and second processing stations (306, 308), and having locating cones (332, 334); and
a cup system (324) included with each of the pallets (160), and having locating cups (338, 342) configured to engage respectively with the locating cones (332, 334).

5. The manufacturing system (100) of any one of Claims 1-4, wherein at least one of the processing stations (306, 308) includes at least one of the following:
an RFID read/write head (364) configured to read an RFID tag (176) included with each pallet (160) to allow the controller (104) to positively identify the pallet (160) located at the first processing station (306) and/or at the second processing station (308); and
a set of tooling features (358) for verifying the location of the pallet (160) relative to a world coordinate system of the manufacturing cell (102).

6. The manufacturing system (100) of any one of Claims 1-5, wherein:
each pallet (160) is configured to support at least one workpiece mounting fixture (182) having a mounting surface (188) containing a plurality of apertures (184); and
at least one of the transport device (400) and the first and second processing stations (306, 308) has a vacuum pressure source (114) fluidly couplable to the apertures (184) of the workpiece mounting fixture (182) for generating vacuum pressure at the apertures (184) for vacuum coupling of the workpiece (186) to the mounting surface (188).

7. The manufacturing system (100) of any one of Claims 1-6, wherein:
the pallets (160) each have a pallet vacuum connector (177);
the transport device (400) comprises:
at least one transport device vacuum pump (410);
a transport device vacuum connector (411) mounted to the transport device (400) and fluidly coupled to the transport device vacuum pump (410); and
the transport device vacuum connector (411) is configured to sealingly engage with the pallet vacuum connector (177) when the transport device (400) engages the pallet (160), thereby providing vacuum pressure at the apertures (184) of the mounting surface (188) of the workpiece mounting fixture (182) for maintaining vacuum coupling of the workpiece (186) to the workpiece mounting fixture (182) when the pallet (160) is transported by the transport device (400).

8. The manufacturing system (100) of any one of Claims 1-6, wherein:
the pallets (160) each have a pallet vacuum connector (177);
the first and second processing stations (306, 308) each include a station vacuum connector (369) fluidly coupled to a factory vacuum pressure source (116); and
the station vacuum connector (369) is configured to sealingly engage with the pallet vacuum connector (177) when the transport device (400) places the pallet (160) at the first or second processing station (306, 308), thereby providing vacuum pressure at the apertures (184) of the mounting surface (188) of the workpiece mounting fixture (182) for vacuum coupling of the workpiece (186) to the workpiece mounting fixture (182) when the workpiece (186) is operated on by the robotic device (200).

9. The manufacturing system (100) of any one of Claims 1-8, wherein:
the manufacturing cell (102) includes at least one subcell (130) having a subcell boundary (140) at least partially enclosing the subcell (130), the subcell (130) containing the robotic device (200) and the first and second processing stations (306, 308), the subcell boundary (140) having at least one entrance (144) for passage of a transport device (400) into and out of the subcell (130), the entrance (144) having at least one pass-through sensor (152) and having an entrance barrier (146) selectively configurable to either prevent or allow passage of the transport device (400) through the entrance (144);
the transport device (400) having a transport device signaling device configured to emit a transport device signal;
the pass-through sensor (152) configured to sense the transport device signal when the transport device (400) approaches the entrance (144); and
the controller (104), in response to the pass-through sensor (152) sensing the transport device signal, is configured to command the entrance barrier (146) to allow passage of the transport device (400) through the entrance (144).

10. A method of processing workpieces (186), comprising:
supporting one or more workpieces (186) on each of a plurality of pallets (160);
transporting, using a transport device (400), any one of the plurality of pallets (160) to a first processing station (306) located in a manufacturing cell (102) within reach of a robotic device (200); and
operating, using the robotic device (200), on a workpiece (186) supported by one of the plurality of pallets (160) at the first processing station (306) while another one of the plurality of pallets (160) is transferred, using the transport device (400), to or from a second processing station (308) located within reach of the robotic device (200).

11. The method of Claim 10, further comprising transporting any one of the plurality of pallets (160) to and/or from a plurality of pallet stations (300), wherein transporting any one of the plurality of pallets (160) to and/or from the plurality of pallet stations (300) comprises at least one of the following:
transporting any one of the plurality of pallets (160) to and/or from a feed station (302) configured to support any one of the plurality of pallets (160) prior to transporting, via a transport device (400), from the feed station (302) to one or more processing stations (306, 308); and
transporting any one of the plurality of pallets (160) to and/or from a buffer queuing station (304) configured to temporarily support any one of the pallets (160) in between processing operations at one of the processing stations (306, 308).

12. The method of Claim 10 or 11, further comprising at least one of the following:
reading, via an RFID read/write head (364), an RFID tag (176) included with each pallet (160) to allow the controller (104) to positively identify the pallet (160) located at the first processing station (306) and/or at the second processing station (308); and
verifying, using a set of tooling features (358), the location of the pallet (160) relative to a world coordinate system of the manufacturing cell (102).

13. The method of Claim 10, 11 or 12, wherein supporting one or more workpieces (186) on each of the plurality of pallets (160) comprises:
supporting one or more workpiece mounting fixtures (182) on at least one of the pallets (160), at least one of the workpiece mounting fixtures (182) having a mounting surface (188) containing a plurality of apertures (184); and
mounting a workpiece (186) on the mounting surface (188) of the workpiece mounting fixture (182);
vacuum coupling, using a vacuum pressure source (114) of the transport device (400), the workpiece (186) to the mounting surface (188) when transporting the pallet (160) via the transport device (400); and
vacuum coupling, using a vacuum pressure source (114) respectively of the first and second processing stations (306, 308), the workpiece (186) to the mounting surface (188) when supporting the pallet (160) at the first or second processing station (306, 308).

14. The method of Claim 13, wherein vacuum coupling the workpiece (186) to the mounting surface (188) when transporting the pallet (160) via the transport device (400) comprises:
moving the transport device (400) into engagement with the pallet (160), the transport device (400) having a transport device vacuum connector (411) fluidly coupled to at least one transport device vacuum pump (410);
sealingly engaging the transport device vacuum connector (411) with a pallet vacuum connector (177) of the pallet (160) when moving the transport device (400) into engagement with the pallet (160); and
activating the vacuum pressure source (114) to thereby generate vacuum pressure at the apertures (184) of the mounting surface (188) for vacuum coupling the workpiece (186) to the workpiece mounting fixture (182).

15. The method of any one of Claims 10-14, wherein:
moving the transport device (400) toward an entrance (144) of a subcell (130) of the manufacturing cell (102) having a subcell boundary (140) at least partially enclosing the subcell (130), the entrance (144) having at least one pass-through sensor (152) and having an entrance barrier (146) selectively configurable to either prevent or allow passage of the transport device (400) through the entrance (144);
emitting a transport device signal using a transport device signaling device mounted on the transport device (400);
receiving, using the pass-through sensor (152), the transport device signal when the transport device (400) approaches the entrance (144); and
commanding, using a controller (104) in response to the pass-through sensor (152) receiving the transport device signal, the entrance barrier (146) to allow passage of the transport device (400) through the entrance (144).

## Patentansprüche

1. Herstellungssystem (100) zum Verarbeiten von Werkstücken (186), umfassend:
eine Herstellungszelle (102);
eine Vielzahl von Paletten (160), die jeweils so konfiguriert sind, dass sie ein oder mehrere Werkstücke (186) tragen;
mindestens eine Robotervorrichtung (200), die in der Herstellungszelle (102) montiert und so konfiguriert ist, dass sie an dem einen oder den mehreren Werkstücken (186) arbeitet;
mindestens zwei Verarbeitungsstationen (306, 308), einschließlich einer ersten Verarbeitungsstation (306) und einer zweiten Verarbeitungsstation (308), die sich jeweils in der Herstellungszelle (102) in Reichweite der Robotervorrichtung (200) befinden und jeweils so konfiguriert sind, dass sie eine beliebige aus der Vielzahl von Paletten (160) in einer festen Position relativ zur Robotervorrichtung (200) tragen;
eine Transportvorrichtung (400), die so konfiguriert ist, dass sie eine beliebige der Vielzahl von Paletten (160) zu und von jeder der ersten Verarbeitungsstation (306) und der zweiten Verarbeitungsstation (308) transportiert; und
eine Steuereinheit (104), die so konfiguriert ist, dass sie den Betrieb der Herstellungszelle (102) so koordiniert, dass sie ermöglicht, dass die Robotervorrichtung (200) kontinuierlich an einem Werkstück (186), das von einer der Vielzahl von Paletten (160) getragen wird, an der ersten Verarbeitungsstation (306) arbeitet, während eine andere der Vielzahl von Paletten (160) zu oder von der zweiten Verarbeitungsstation (308) transportiert wird.

2. Herstellungssystem (100) nach Anspruch 1, wobei die Herstellungszelle (102) eine Vielzahl von Palettenstationen (300) einschließt, die jeweils so konfiguriert sind, dass sie eine der Vielzahl von Paletten (160) tragen, und wobei die Palettenstationen (300) als mindestens eines von Folgendem konfiguriert sind:
eine Verarbeitungsstation (306, 308);
eine Zuführstation (302), die so konfiguriert ist, dass sie eine beliebige der Vielzahl von Paletten (160) vor dem Transport der Palette (160) über die Transportvorrichtung (400) von der Zuführstation (302) zu einer der Verarbeitungsstationen (306, 308) trägt; und
eine Pufferwartestation (304), die so konfiguriert ist, dass sie zwischen den Verarbeitungsvorgängen an einer der Verarbeitungsstationen (306, 308) vorübergehend eine der Paletten (160) trägt.

3. Herstellungssystem (100) nach Anspruch 1 oder 2, weiter umfassend:
ein Lokalisierungssystem (316), das so konfiguriert ist, dass es eine beliebige der Paletten (160) an eine der ersten und zweiten Verarbeitungsstationen (306, 308) in einer präzisen und wiederholbaren Position und Ausrichtung relativ zu der Robotervorrichtung (200) koppelt, wobei das Lokalisierungssystem (316) ein Dreipunkt-Lokalisierungssystem (316) umfasst, das drei Lokalisierungspunkte (321) aufweist, die in einem dreieckigen Muster angeordnet sind.

4. Herstellungssystem (100) nach Anspruch 3, wobei das Lokalisierungssystem (316) Folgendes umfasst:
ein Kegelsystem (322), das in jeder der ersten und zweiten Verarbeitungsstationen (306, 308) eingeschlossen ist und Lokalisierungskegel (332, 334) aufweist; und
ein Bechersystem (324), das in jeder der Paletten (160) eingeschlossen ist und Lokalisierungsbecher (338, 342) aufweist, die so konfiguriert sind, dass sie jeweils in die Lokalisierungskegel (332, 334) eingreifen.

5. Herstellungssystem (100) nach einem der Ansprüche 1 bis 4, wobei mindestens eine der Verarbeitungsstationen (306, 308) mindestens eines von Folgendem einschließt:
einen RFID-Lese-/Schreibkopf (364), der so konfiguriert ist, dass er ein RFID-Tag (176) liest, das in jeder Palette (160) eingeschlossen ist, um der Steuereinheit (104) zu ermöglichen, die Palette (160), die sich an der ersten Verarbeitungsstation (306) und/oder an der zweiten Verarbeitungsstation (308) befindet, eindeutig zu identifizieren; und
einen Satz von Werkzeugmerkmalen (358) zum Überprüfen der Lage der Palette (160) relativ zu einem Weltkoordinatensystem der Herstellungszelle (102).

6. Herstellungssystem (100) nach einem der Ansprüche 1 bis 5, wobei:
jede Palette (160) so konfiguriert ist, dass sie mindestens ein Werkstückbefestigungsorgan (182) trägt, die eine Befestigungsfläche (188) aufweist, die eine Vielzahl von Öffnungen (184) enthält; und
mindestens eine von der Transportvorrichtung (400) und der ersten und zweiten Verarbeitungsstation (306, 308) eine Vakuumdruckquelle (114) aufweist, die mit den Öffnungen (184) des Werkstückbefestigungsorgans (182) in Fluidverbindung gebracht werden kann, um an den Öffnungen (184) einen Vakuumdruck zur Vakuumkopplung des Werkstücks (186) mit der Befestigungsfläche (188) zu erzeugen.

7. Herstellungssystem (100) nach einem der Ansprüche 1 bis 6, wobei:
die Paletten (160) jeweils einen Paletten-Vakuumanschluss (177) aufweisen;
die Transportvorrichtung (400) Folgendes umfasst:
mindestens eine Transportvorrichtungs-Vakuumpumpe (410);
einen Transportvorrichtungs-Vakuumanschluss (411), der an der Transportvorrichtung (400) befestigt und mit der Transportvorrichtungs- Vakuumpumpe (410) in Fluidverbindung steht; und
der Transportvorrichtungs-Vakuumanschluss (411) so konfiguriert ist, dass er abdichtend in den Paletten-Vakuumanschluss (177) eingreift, wenn die Transportvorrichtung (400) an der Palette (160) angreift, wodurch ein Vakuumdruck an den Öffnungen (184) der Befestigungsfläche (188) des Werkstückbefestigungsorgans (182) bereitgestellt wird, um eine Vakuumkopplung des Werkstücks (186) mit dem Werkstückbefestigungsorgan (182) aufrechtzuerhalten, wenn die Palette (160) von der Transportvorrichtung (400) transportiert wird.

8. Herstellungssystem (100) nach einem der Ansprüche 1 bis 6, wobei:
die Paletten (160) jeweils einen Paletten-Vakuumanschluss (177) aufweisen;
die erste und die zweite Verarbeitungsstation (306, 308) jeweils einen Stations-Vakuumanschluss (369) einschließen, der mit einer Werksvakuumdruckquelle (116) in Fluidverbindung steht; und
der Stations-Vakuumanschluss (369) so konfiguriert ist, dass er abdichtend in den Paletten-Vakuumanschluss (177) eingreift, wenn die Transportvorrichtung (400) die Palette (160) an der ersten oder zweiten Verarbeitungsstation (306, 308) positioniert, wodurch ein Vakuumdruck an den Öffnungen (184) der Befestigungsfläche (188) des Werkstückbefestigungsorgans (182) zur Vakuumkopplung des Werkstücks (186) an dem Werkstückbefestigungsorgan (182) bereitgestellt wird, wenn das Werkstück (186) von der Robotervorrichtung (200) verarbeitet wird.

9. Herstellungssystem (100) nach einem der Ansprüche 1 bis 8, wobei:
die Herstellungszelle (102) mindestens eine Unterzelle (130) einschließt, die eine Unterzellenbegrenzung (140) aufweist, die die Unterzelle (130) zumindest teilweise umschließt, wobei die Unterzelle (130) die Robotervorrichtung (200) und die erste und zweite Verarbeitungsstation (306, 308) enthält, wobei die Unterzellenbegrenzung (140) mindestens einen Eingang (144) für den Durchgang einer Transportvorrichtung (400) in die und aus der Unterzelle (130) aufweist, wobei der Eingang (144) mindestens einen Durchgangssensor (152) und eine Eingangssperre (146) aufweist, die selektiv konfigurierbar ist, um den Durchgang der Transportvorrichtung (400) durch den Eingang (144) entweder zu verhindern oder zu ermöglichen;
wobei die Transportvorrichtung (400) eine Transportvorrichtungs-Signalisierungsvorrichtung aufweist, die so konfiguriert ist, dass sie ein Transportvorrichtungssignal ausgibt;
der Durchgangssensor (152) so konfiguriert ist, dass er das Transportvorrichtungssignal erfasst, wenn sich die Transportvorrichtung (400) dem Eingang (144) nähert; und
die Steuereinheit (104) in Reaktion auf den Durchgangssensor (152), der das Transportvorrichtungssignal erfasst, so konfiguriert ist, dass sie die Eingangssperre (146) anweist, den Durchgang der Transportvorrichtung (400) durch den Eingang (144) zu ermöglichen.

10. Verfahren zum Verarbeiten von Werkstücken (186), umfassend:
Tragen von einem oder mehreren Werkstücken (186) auf jeder einer Vielzahl von Paletten (160);
Transportieren, unter Verwendung einer Transportvorrichtung (400), einer beliebigen der Vielzahl von Paletten (160) zu einer ersten Verarbeitungsstation (306), die sich in einer Herstellungszelle (102) in Reichweite einer Robotervorrichtung (200) befindet; und
Arbeiten unter Verwendung der Robotervorrichtung (200) an einem Werkstück (186), das von einer der Vielzahl von Paletten (160) an der ersten Verarbeitungsstation (306) getragen wird, während eine andere der Vielzahl von Paletten (160) unter Verwendung der Transportvorrichtung (400) zu oder von einer zweiten Verarbeitungsstation (308) transportiert wird, die sich in Reichweite der Robotervorrichtung (200) befindet.

11. Verfahren nach Anspruch 10, weiter umfassend das Transportieren einer beliebigen der Vielzahl von Paletten (160) zu und/oder von einer Vielzahl von Palettenstationen (300), wobei das Transportieren einer beliebigen der Vielzahl von Paletten (160) zu und/oder von der Vielzahl von Palettenstationen (300) mindestens eines von Folgendem umfasst:
Transportieren einer beliebigen der Vielzahl von Paletten (160) zu und/oder von einer Zuführstation (302), die so konfiguriert ist, dass sie eine beliebige der Vielzahl von Paletten (160) trägt, bevor sie über eine Transportvorrichtung (400) von der Zuführstation (302) zu einer oder mehreren Verarbeitungsstationen (306, 308) transportiert wird; und
Transportieren einer beliebigen der Vielzahl von Paletten (160) zu und/oder von einer Pufferwartestation (304), die so konfiguriert ist, dass sie eine beliebige der Paletten (160) zwischen Verarbeitungsvorgängen an einer der Verarbeitungsstationen (306, 308) vorübergehend trägt.

12. Verfahren nach Anspruch 10 oder 11, das weiter mindestens eines von Folgendem umfasst:
Lesen eines RFID-Tags (176), der in jeder Palette (160) eingeschlossen ist, über einen RFID-Lese-/Schreibkopf (364), um der Steuereinheit (104) zu ermöglichen, die Palette (160), die sich an der ersten Verarbeitungsstation (306) und/oder an der zweiten Verarbeitungsstation (308) befindet, eindeutig zu identifizieren; und
Überprüfen der Lage der Palette (160) relativ zu einem Weltkoordinatensystem der Herstellungszelle (102) unter Verwendung eines Satzes von Werkzeugmerkmalen (358).

13. Verfahren nach Anspruch 10, 11 oder 12, wobei das Tragen eines oder mehrerer Werkstücke (186) auf jeder der Vielzahl von Paletten (160) Folgendes umfasst:
Tragen einer oder mehrerer Werkstückbefestigungsvorrichtungen (182) auf mindestens einer der Paletten (160), wobei mindestens eines der Werkstückbefestigungsorgane (182) eine Befestigungsfläche (188) aufweist, die eine Vielzahl von Öffnungen (184) enthält; und
Befestigen eines Werkstücks (186) auf der Befestigungsfläche (188) des Werkstückbefestigungsorgans (182);
Vakuumkoppeln des Werkstücks (186) an die Befestigungsfläche (188) unter Verwendung einer Vakuumdruckquelle (114) der Transportvorrichtung (400) beim Transportieren der Palette (160) über die Transportvorrichtung (400); und
Vakuumkoppeln des Werkstücks (186) an die Befestigungsfläche (188) unter Verwendung einer Vakuumdruckquelle (114) der ersten bzw. zweiten Verarbeitungsstation (306, 308), wenn die Palette (160) an der ersten oder zweiten Verarbeitungsstation (306, 308) getragen wird.

14. Verfahren nach Anspruch 13, wobei das Vakuumkoppeln des Werkstücks (186) an die Befestigungsfläche (188) beim Transportieren der Palette (160) über die Transportvorrichtung (400) Folgendes umfasst:
Bewegen der Transportvorrichtung (400) in Eingriff mit der Palette (160), wobei die Transportvorrichtung (400) einen Transportvorrichtungs-Vakuumanschluss (411) aufweist, der mit mindestens einer Transportvorrichtungs-Vakuumpumpe (410) in Fluidverbindung steht;
abdichtendes Eingreifen des Transportvorrichtungs-Vakuumanschlusses (411) mit einem Paletten-Vakuumanschluss (177) der Palette (160), wenn die Transportvorrichtung (400) in Eingriff mit der Palette (160) bewegt wird; und
Aktivieren der Vakuumdruckquelle (114), um dadurch einen Vakuumdruck an den Öffnungen (184) der Befestigungsfläche (188) zu erzeugen, um das Werkstück (186) mit dem Werkstückbefestigungsorgan (182) unter Vakuum zu koppeln.

15. Verfahren nach einem der Ansprüche 10 bis 14, wobei:
Bewegen der Transportvorrichtung (400) in Richtung eines Eingangs (144) einer Unterzelle (130) der Herstellungszelle (102), die eine Unterzellenbegrenzung (140) aufweist, die die Unterzelle (130) zumindest teilweise umschließt, wobei der Eingang (144) mindestens einen Durchgangssensor (152) und eine Eingangssperre (146) aufweist, die selektiv konfigurierbar ist, um den Durchgang der Transportvorrichtung (400) durch den Eingang (144) entweder zu verhindern oder zu ermöglichen;
Ausgeben eines Transportvorrichtungssignals unter Verwendung einer an der Transportvorrichtung (400) befestigten Transportvorrichtungs-Signalisierungsvorrichtung;
Empfangen des Signals der Transportvorrichtung unter Verwendung des Durchgangssensors (152), wenn sich die Transportvorrichtung (400) dem Eingang (144) nähert; und
Anweisen, unter Verwendung einer Steuereinheit (104) in Reaktion darauf, dass der Durchgangssensor (152) das Signal der Transportvorrichtung empfängt, der Eingangssperre (146), den Durchgang der Transportvorrichtung (400) durch den Eingang (144) zu ermöglichen.

## Revendications

1. Système de fabrication (100) pour traiter des pièces (186), comprenant :
une cellule de fabrication (102) ;
une pluralité de palettes (160) configurées chacune pour supporter une ou plusieurs pièces (186) ;
au moins un dispositif robotique (200) monté dans la cellule de fabrication (102) et configuré pour fonctionner sur les une ou plusieurs pièces (186) ;
au moins deux stations de traitement (306, 308), incluant une première station de traitement (306) et une seconde station de traitement (308), situées chacune dans la cellule de fabrication (102) à la portée du dispositif robotique (200) et configurées chacune pour supporter l'une quelconque de la pluralité de palettes (160) en position fixe par rapport au dispositif robotique (200) ;
un dispositif de transport (400) configuré pour transporter l'une quelconque de la pluralité de palettes (160) vers et depuis chacune de la première station de traitement (306) et de la seconde station de traitement (308) ; et
un dispositif de commande (104) configuré pour coordonner le fonctionnement de la cellule de fabrication (102) d'une manière permettant au dispositif robotique (200) de fonctionner en continu sur une pièce (186) supportée par l'une de la pluralité de palettes (160) au niveau de la première station de traitement (306) alors qu'une autre de la pluralité de palettes (160) est transférée vers ou depuis la seconde station de traitement (308).

2. Système de fabrication (100) selon la revendication 1, dans lequel la cellule de fabrication (102) inclut une pluralité de stations (300) de palettes, configurées chacune pour supporter l'une de la pluralité de palettes (160), et dans lequel les stations (300) de palettes sont configurées en tant qu'au moins une parmi les suivantes :
une station de traitement (306, 308) ;
une station d'alimentation (302) configurée pour supporter l'une quelconque de la pluralité de palettes (160) avant le transport de la palette (160), via le dispositif de transport (400), depuis la station d'alimentation (302) vers l'une des stations de traitement (306, 308) ; et
une station (304) de mise en file d'attente de tampon configurée pour supporter provisoirement l'une quelconque des palettes (160) entre des opérations de traitement au niveau de l'une des stations de traitement (306, 308).

3. Système de fabrication (100) selon la revendication 1 ou la revendication 2, comprenant en outre :
un système de positionnement (316) configuré pour coupler l'une quelconque des palettes (160) vers l'une ou l'autre des première et seconde stations de traitement (306, 308) dans un emplacement et une orientation précis et répétables par rapport au dispositif robotique (200), le système de positionnement (316) comprenant un système de positionnement à trois points (316) présentant trois points de positionnement (321) agencés selon un motif triangulaire.

4. Système de fabrication (100) selon la revendication 3, dans lequel le système de positionnement (316) comprend :
un système (322) à cônes inclus avec chacune des première et seconde stations de traitement (306, 308), et présentant des cônes de positionnement (332, 334) ; et
un système (324) à coupelles inclus avec chacune des palettes (160), et présentant des coupelles de positionnement (338, 342) configurées pour venir en prise respectivement avec les cônes de positionnement (332, 334).

5. Système de fabrication (100) selon l'une quelconque des revendications 1 à 4, dans lequel au moins l'une des stations de traitement (306, 308) inclut au moins un des suivants :
une tête (364) de lecture/écriture de RFID configurée pour lire une étiquette RFID (176) incluse avec chaque palette (160) pour permettre au dispositif de commande (104) d'identifier positivement la palette (160) située au niveau de la première station de traitement (306) et/ou au niveau de la seconde station de traitement (308) ; et
un ensemble d'éléments d'outillage (358) pour vérifier l'emplacement de la palette (160) par rapport à un système de coordonnées mondiales de la cellule de fabrication (102).

6. Système de fabrication (100) selon l'une quelconque des revendications 1 à 5, dans lequel :
chaque palette (160) est configurée pour supporter au moins un appareil (182) de montage de pièce présentant une surface de montage (188) contenant une pluralité d'ouvertures (184) ; et
au moins l'un parmi le dispositif de transport (400) et les première et seconde stations de traitement (306, 308) présente une source de pression sous vide (114) pouvant être couplée de manière fluidique aux ouvertures (184) de l'appareil (182) de montage de pièce pour générer une pression sous vide au niveau des ouvertures (184) pour un couplage par vide de la pièce (186) à la surface de montage (188).

7. Système de fabrication (100) selon l'une quelconque des revendications 1 à 6, dans lequel :
les palettes (160) présentent chacune un connecteur à vide (177) de palette ;
le dispositif de transport (400) comprend :
au moins une pompe à vide (410) de dispositif de transport ;
un connecteur à vide (411) de dispositif de transport monté sur le dispositif de transport (400) et couplé de manière fluidique à la pompe à vide (410) de dispositif de transport ; et
le connecteur à vide (411) de dispositif de transport est configuré pour venir en prise de manière étanche avec le connecteur à vide (177) de palette lorsque le dispositif de transport (400) vient en prise avec la palette (160), fournissant ainsi une pression sous vide au niveau des ouvertures (184) de la surface de montage (188) de l'élément (182) de montage de pièce pour maintenir un couplage par vide de la pièce (186) sur l'appareil (182) de montage de pièce lorsque la palette (160) est transportée par le dispositif de transport (400).

8. Système de fabrication (100) selon l'une quelconque des revendications 1 à 6, dans lequel :
les palettes (160) présentent chacune un connecteur à vide (177) de palette ;
les première et seconde stations de traitement (306, 308) incluent chacune un connecteur à vide (369) de station couplé de manière fluidique à une source de pression sous vide (116) d'usine ; et
le connecteur à vide (369) de station est configuré pour venir en prise de manière étanche avec le connecteur à vide (177) de palette lorsque le dispositif de transport (400) place la palette (160) au niveau de la première ou de la seconde station de traitement (306, 308), fournissant ainsi une pression sous vide au niveau des ouvertures (184) de la surface de montage (188) de l'appareil (182) de montage de pièce pour un couplage par vide de la pièce (186) sur l'appareil (182) de montage de pièce lorsque la pièce (186) est manipulée par le dispositif robotique (200).

9. Système de fabrication (100) selon l'une quelconque des revendications 1 à 8, dans lequel :
la cellule de fabrication (102) inclut au moins une sous-cellule (130) présentant une frontière (140) de sous-cellule enfermant au moins partiellement la sous-cellule (130), la sous-cellule (130) contenant le dispositif robotique (200) et les première et seconde stations de traitement (306, 308), la frontière (140) de sous-cellule présentant au moins une entrée (144) pour le passage d'un dispositif de transport (400) dans et hors de la sous-cellule (130), l'entrée (144) présentant au moins un capteur (152) de traversée et présentant une barrière (146) d'entrée sélectivement configurable pour soit empêcher soit permettre le passage du dispositif de transport (400) à travers l'entrée (144) ;
le dispositif de transport (400) présentant un dispositif de signalisation de dispositif de transport configuré pour émettre un signal de dispositif de transport ;
le capteur (152) de traversée configuré pour détecter le signal de dispositif de transport lorsque le dispositif de transport (400) s'approche de l'entrée (144) ; et
le dispositif de commande (104), en réponse au capteur (152) de traversée détectant le signal de dispositif de transport, est configuré pour ordonner à la barrière (146) d'entrée de permettre le passage du dispositif de transport (400) à travers l'entrée (144).

10. Procédé de traitement de pièces (186), comprenant :
un support d'une ou plusieurs pièces (186) sur chacune d'une pluralité de palettes (160) ;
un transport, en utilisant un dispositif de transport (400), de l'une quelconque de la pluralité de palettes (160) jusqu'à une première station de traitement (306) située dans une cellule de fabrication (102) à portée d'un dispositif robotique (200) ; et
un fonctionnement, en utilisant le dispositif robotique (200), sur une pièce (186) supportée par l'une de la pluralité de palettes (160) au niveau de la première station de traitement (306) alors qu'une autre de la pluralité de palettes (160) est transférée, en utilisant le dispositif de transport (400), vers ou depuis une seconde station de traitement (308) située à portée du dispositif robotique (200).

11. Procédé selon la revendication 10, comprenant en outre un transport de l'une quelconque de la pluralité de palettes (160) vers et/ou depuis une pluralité de stations (300) de palettes, dans lequel le transport de l'une quelconque de la pluralité de palettes (160) vers et/ou depuis la pluralité de stations (300) de palettes comprend au moins une parmi les suivantes :
un transport de l'une quelconque de la pluralité de palettes (160) vers et/ou depuis une station d'alimentation (302) configurée pour supporter l'une quelconque de la pluralité de palettes (160) avant transport, via un dispositif de transport (400), depuis la station d'alimentation (302) vers une ou plusieurs stations de traitement (306, 308) ; et
un transport de l'une quelconque de la pluralité de palettes (160) vers et/ou depuis une station (304) de mise en file d'attente de tampon configurée pour supporter provisoirement l'une quelconque des palettes (160) entre des opérations de traitement au niveau de l'une des stations de traitement (306, 308).

12. Procédé selon la revendication 10 ou la revendication 11, comprenant en outre au moins une étape parmi les étapes suivantes :
une lecture, via une tête (364) de lecture/écriture de RFID, d'une étiquette RFID (176) incluse avec chaque palette (160) pour permettre au dispositif de commande (104) d'identifier positivement la palette (160) située au niveau de la première station de traitement (306) et/ou au niveau de la seconde station de traitement (308) ; et
une vérification, en utilisant un ensemble d'éléments d'outillage (358), de l'emplacement de la palette (160) par rapport à un système de coordonnées mondiales de la cellule de fabrication (102).

13. Procédé selon la revendication 10, 11 ou 12, dans lequel le support d'une ou plusieurs pièces (186) sur chacune de la pluralité de palettes (160) comprend :
un support d'un ou plusieurs appareils (182) de montage de pièce sur au moins une des palettes (160), au moins un des appareils (182) de montage de pièce présentant une surface de montage (188) contenant une pluralité d'ouvertures (184) ; et
un montage d'une pièce (186) sur la surface de montage (188) de l'appareil (182) de montage de pièce ;
un couplage par vide, en utilisant une source de pression sous vide (114) du dispositif de transport (400), de la pièce (186) à la surface de montage (188) lors du transport de la palette (160) via le dispositif de transport (400) ; et
un couplage par vide, en utilisant une source de pression sous vide (114) respectivement des première et seconde stations de traitement (306, 308), de la pièce (186) à la surface de montage (188) lors du support de la palette (160) au niveau de la première ou de la seconde station de traitement (306, 308).

14. Procédé selon la revendication 13, dans lequel le couplage par vide de la pièce (186) à la surface de montage (188) lors du transport de la palette (160) via le dispositif de transport (400) comprend :
un déplacement du dispositif de transport (400) en prise avec la palette (160), le dispositif de transport (400) présentant un connecteur à vide (411) de dispositif de transport couplé de manière fluidique à au moins une pompe à vide (410) de dispositif de transport ;
une mise en prise de manière étanche du connecteur à vide (411) de dispositif de transport avec un connecteur à vide (177) de palette de la palette (160) lors du déplacement du dispositif de transport (400) en prise avec la palette (160) ; et
une activation de la source de pression sous vide (114) pour générer ainsi une pression sous vide au niveau des ouvertures (184) de la surface de montage (188) pour un couplage par vide de la pièce (186) à l'appareil (182) de montage de pièce.

15. Procédé selon l'une quelconque des revendications 10 à 14, dans lequel :
un déplacement du dispositif de transport (400) vers une entrée (144) d'une sous-cellule (130) de la cellule de fabrication (102) présentant une frontière (140) de sous-cellule enfermant au moins partiellement la sous-cellule (130), l'entrée (144) présentant au moins un capteur (152) de traversée et présentant une barrière (146) d'entrée sélectivement configurable pour soit empêcher soit permettre le passage du dispositif de transport (400) à travers l'entrée (144) ;
une émission d'un signal de dispositif de transport en utilisant un dispositif de signalisation de dispositif de transport monté sur le dispositif de transport (400) ;
une réception, en utilisant le capteur (152) de traversée, du signal de dispositif de transport lorsque le dispositif de transport (400) s'approche de l'entrée (144) ; et
le fait d'ordonner, en utilisant un dispositif de commande (104) en réponse à une réception du signal de dispositif de transport par le capteur (152) de traversée, à la barrière (146) d'entrée de permettre le passage du dispositif de transport (400) à travers l'entrée (144).
